(19) Europäisches Patentamt
European Patent Office
Office européen des brevets

(11) **EP 4 095 765 B1**

(12) **EUROPEAN PATENT SPECIFICATION**

(45) Date of publication and mention
of the grant of the patent:
**23.04.2025 Bulletin 2025/17**

(21) Application number: **21835572.5**

(22) Date of filing: **28.09.2021**

(51) International Patent Classification (IPC):
$G06N\ 10/20^{(2022.01)}$ $G06N\ 10/40^{(2022.01)}$
$G06N\ 10/60^{(2022.01)}$ $G06N\ 10/70^{(2022.01)}$
$G06F\ 30/398^{(2020.01)}$ $G06F\ 111/04^{(2020.01)}$
$G06F\ 11/00^{(2006.01)}$

(52) Cooperative Patent Classification (CPC):
**G06N 10/20; G06F 30/337; G06N 10/40;
G06N 10/70;** G06F 11/3003

(86) International application number:
**PCT/CN2021/121487**

(87) International publication number:
**WO 2022/217854 (20.10.2022 Gazette 2022/42)**

(54) **QUANTUM GATE OPTIMIZATION METHOD AND APPARATUS, AND DEVICE AND STORAGE MEDIUM**

VERFAHREN UND VORRICHTUNG ZUR OPTIMIERUNG EINES QUANTEN-GATES, VORRICHTUNG UND SPEICHERMEDIUM

PROCÉDÉ ET APPAREIL D'OPTIMISATION DE PORTE QUANTIQUE, ET DISPOSITIF ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.04.2021 CN 202110410057**

(43) Date of publication of application:
**30.11.2022 Bulletin 2022/48**

(73) Proprietors:
• **Shenzhen Tencent Computer Systems Company Limited
Shenzhen, Guangdong 518000 (CH)**
• **Zhejiang University
Hangzhou, Zhejiang 310058 (CN)**

(72) Inventors:
• **WU, Jianlan
Zhejiang 310058 (CN)**
• **YIN, Yi
Zhejiang 310058 (CN)**
• **ZONG, Zhiwen
Zhejiang 310058 (CN)**

(74) Representative: **Eisenführ Speiser
Patentanwälte Rechtsanwälte PartGmbB
Postfach 10 60 78
28060 Bremen (DE)**

(56) References cited:
CN-A- 110 612 540    CN-A- 111 369 004
CN-A- 112 313 677    CN-A- 113 158 615
US-A1- 2018 123 597    US-A1- 2020 327 441

• **RE-BING WU ET AL: "A Data-Driven Gradient Algorithm for High-Precision Quantum Control",** ARXIV.ORG, CORNELL UNIVERSITY LIBRARY, 201 OLIN LIBRARY CORNELL UNIVERSITY ITHACA, NY 14853, 5 December 2017 (2017-12-05), XP081149932, DOI: 10.1103/ PHYSREVA.97.042122

**Description**

This application claims priority to Chinese Patent Application No. 202110410057.9, titled "METHOD AND APPARATUS FOR OPTIMIZING QUANTUM GATE, DEVICE, AND STORAGE MEDIUM" filed on April 15, 2021.

FIELD

Embodiments of the present disclosure relate to the technical field of quantum, and in particular to a method and an apparatus for optimizing a quantum gate, a device, and a storage medium.

BACKGROUND

A quantum gate is a basic component of a quantum circuit. Multiple quantum gates are combined to construct a complex quantum circuit, so as to implement quantum computing and quantum simulation. Therefore, the implementation of high-precision quantum gates is essential for the quantum computing and quantum simulation.

Currently, none of the quantum gate optimization solutions can improve both the precision and efficiency. According to RE-BING WU ET AL:"A Data-Driven Gradient Algorithm for High-precision Quantum Control", in the quest to achieve scalable quantum information processing technologies, gradient-based optimal control algorithms (e.g., GRAPE) are broadly used for implementing high-precision quantum gates, but their performance is often hindered by deterministic or random errors in the system model and the control electronics. RE-BING WU shows that GRAPE can be taught to be more effective by jointly learning from the design model and the experimental data obtained from process tomography. The resulting data-driven gradient optimization algorithm (d-GRAPE) can in principle correct all deterministic gate errors, with a mild efficiency loss. The d-GRAPE algorithm may become more powerful with broadband controls that involve a large number of control parameters, while other algorithms usually slow down due to the increased size of the search space. These advantages are demonstrated by stimulating the implementation of a two-qubit CNOT gate.

According to US2018/123597A1, in a general aspect, control of a quantum superconducting circuit is analyzed. In some implementation, a parameter set for a control signal for a superconducting quantum circuit is received. The parameters set can include initial voltage amplitudes for respective time segments of the control signal. A first subset of time segments is selected for improving a quality measure of a quantum logic operation produced by delivery of the control signal in the superconducting quantum circuit. New voltage amplitudes are calculated for one or more segments in the first subset, such that the new voltage amplitudes improve the quality measure. The parameter set is updated to include the new voltage amplitudes for the first subset while preserving the initial voltage amplitudes for a second subset of the time segments.

SUMMARY

The invention is set out in the appended set of claims. The dependent claims set out particular embodiments.

The technical solutions provided in the embodiments of the present disclosure can achieve at least the following beneficial effects.

The quantum gate optimization solution provided in the present disclosure is a closed-loop optimization solution driven and implemented by data feedback. In the present disclosure, an optimization algorithm based on gradient constraint is combined with actual measurement data. On one hand, the control external field is optimized based on gradient constraint, an optimization time can be shortened and optimization costs can be reduced as compared with some optimization solution without gradient constraints. On the other hand, the actual measurement data of the quantum gate is acquired during the optimization process, and optimization is performed by using the actual measurement data as feedback, thereby ensuring the effect and precision of optimization. With reference to the foregoing two aspects, a quantum gate optimization solution that improves both the precision and efficiency is provided according to the present disclosure.

BRIEF DESCRIPTION OF THE DRAWINGS

To describe the technical solutions of the embodiments of the present disclosure clearer, the accompanying drawings required for describing the embodiments are briefly introduced hereinafter. Apparently, the accompanying drawings in the following description show only some embodiments of the present disclosure, and a person of ordinary skill in the art may derive other drawings from these accompanying drawings without creative efforts.

FIG. 1 is a schematic structural diagram of an experimental platform for a superconducting quantum computer according to the present disclosure.
FIG. 2 is a flowchart of a method for optimizing a quantum gate according to the present disclosure.

FIG. 3 is a schematic diagram of an optimization solution based on a gate operator according to the present disclosure.

FIG. 4 is a schematic diagram of an optimization solution based on an output density matrix according to the present disclosure.

FIG. 5 is a block diagram of an apparatus for optimizing a quantum gate according to the present disclosure.

FIG. 6 is a structural block diagram of a computer device according to the present disclosure.

DETAILED DESCRIPTION OF EMBODIMENTS

To make the objectives, technical solutions, and advantages of the present disclosure clearer, implementations of the present disclosure are described in detail with reference to the accompanying drawings hereinafter.

Before embodiments of the present disclosure are described, some terms involved in the present disclosure are explained first.

1. Quantum computing (QC): a novel computing method in which calculation is performed by running algorithms according to principles of superposition and entanglement of quantum states in quantum mechanics.

2. Quantum bit (Qubit): a two-level quantum system, which is a basic unit of quantum computing and may be implemented on different physical carriers.

3. Superconducting quantum bit (SC Qubit): a quantum bit based on a superconducting quantum circuit designed and fabricated by using a micro-nano processing technology. Through classical microwave pulse signals, control and quantum state measurement of the SC qubit can be implemented.

4. Quantum circuit and quantum gate: Quantum circuit is a quantum computing model in which a quantum computing process is decomposed into a series of quantum gate operations performed on multiple quantum bits.

5. Lindblad equation: an equation used for describing evolution of a density matrix of an open quantum system that satisfies Markov approximation with time under a weak coupling interaction.

6. Quantum state tomography (QST): a commonly used method for calibrating quantum states in which projection measurement is performed on the quantum states in different directions to construct a corresponding density matrix.

7. Quantum process tomography (QPT): a commonly used method for calibrating a quantum gate, in which different initial states are selected to pass through a specific quantum gate, and corresponding final states are obtained through the QST to construct a process matrix including all information of the quantum gate.

8. Randomized benchmarking measurement: n random Clifford gates are selected, and, a base state probability of a gate circuit is obtained through an inverse operation by collecting a large number of statistics, and multiple measurements are performed by changing a value of n, so that an attenuation rate of a waveform sequence can be extracted.

9. Interleaved randomized benchmarking measurement: n random Clifford gates are selected, and a target quantum gate that needs to be calibrated is inserted at the end, and, a base state probability of a gate circuit is obtained through an inverse operation by collecting a large number of statistics, and multiple measurements are performed by changing the value of n, so that an attenuation rate of a waveform sequence can be extracted. With reference to results of the randomized benchmarking measurement, the precision of the target quantum gate is further calibrated.

10. GRAPE algorithm: a gradient ascent pulse engineering algorithm, in which a gradient of a discretized waveform is calculated based on a defined objective function, and multiple iterations are performed, so that a waveform converges to near an optimal value.

11. Powell algorithm: an accelerated algorithm in which a one-dimensional search is performed sequentially on a multi-dimensional objective function based on a conjugate direction to find a minimum value.

12. Nelder-Mead algorithm: a gradient-free algorithm for finding a minimum value of a multivar-iate function, of which the core is to update an initially selected simplex according to specific rules until the simplex is small enough, so as to find an optimized parameter at this time.

13. Control external field: with regard to the SC qubit, a control external field generally refers to a microwave drive applied to a qubit. A microwave applied to a diagonal element part of a bit Hamiltonian is referred to as a control external field in a z direction. A microwave applied to a non-diagonal element part of the bit Hamiltonian is referred to as a control external field in an xy direction.

14. Two-bit probability exchange: after a bit is prepared to an excited state and if another bit is coupled to the bit, the probability of the excited state is exchanged between the two bits. The exchange capability is decreased as the coupling strength is decreased.

15. Trivial dynamic phase: without considering an inter-bit coupling effect, due to the external field in the z direction, a cumulative phase introduced in the diagonal element of the bit is generally referred to as a trivial dynamic phase.

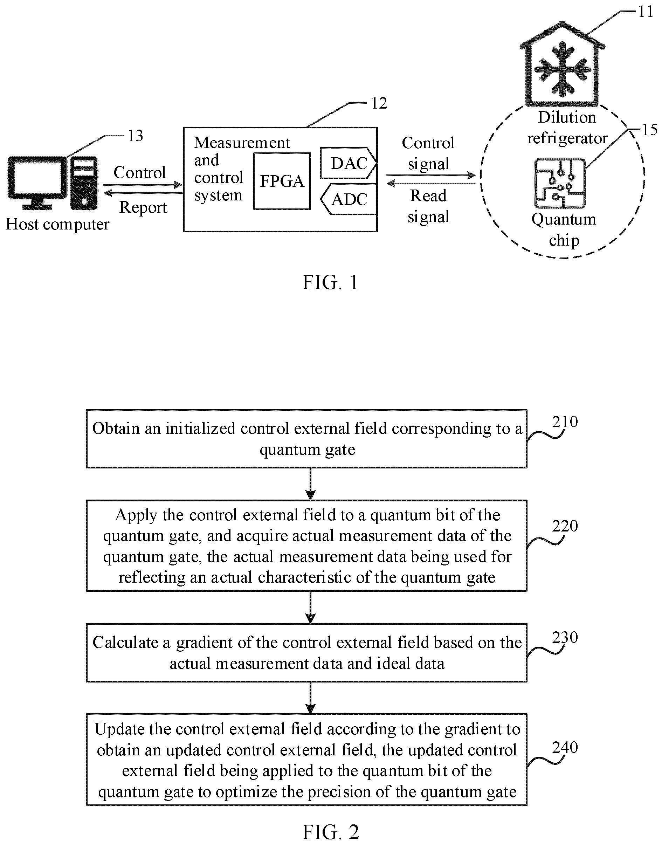

FIG. 1 is a schematic structural diagram of an experimental platform for a superconducting quantum computer according to an exemplary embodiment of the present disclosure. A dilution refrigerator 11 is located on the rightmost side of FIG. 1, and is configured to provide a working environment for a quantum chip 15 (such as a superconducting quantum chip). The quantum chip 15 works at a temperature of 10 mk. The quantum chip 15 is controlled by analog waveforms, and therefore, implements control and measurement through a measurement and control system 12 mainly including a field programmable gate array (FPGA) and an analog-to-digital converter (ADC)/digital-to-analog converter (DAC). The measurement and control system 12 is controlled by measurement and control software of a host computer 13, and the measurement and control software determines an experiment to be carried out currently, and performs experimental configurations on the measurement and control system 12, and the like. The host computer 13 may be a classic computer such as a personal computer (PC).

An ideal gate operator may be equivalent to a time evolution operator that completely depends on a control external field. Therefore, optimization of a quantum gate may be equivalent to optimization of the control external field corresponding to the quantum gate. The quantum gate optimization solution provided in the present disclosure is a closed-loop optimization solution driven and implemented by data feedback. In the present disclosure, an optimization algorithm based on gradient constraint is combined with actual measurement data. On one hand, the control external field is optimized based on gradient constraint, an optimization time can be shortened and optimization costs can be reduced as compared with some optimization solution without gradient constraints. On the other hand, the actual measurement data of the quantum gate is acquired during the optimization process, and optimization is performed by using the actual measurement data as feedback, thereby ensuring the effect and precision of optimization. With reference to the foregoing two aspects, a quantum gate optimization solution that improves both the precision and efficiency is provided according to the present disclosure.

Before method embodiments of the present disclosure are described, an operating environment of the method is described first. A method for optimizing a quantum gate provided in the embodiments of the present disclosure may be performed and implemented by a classic computer (such as a PC). For example, the method may be implemented by a classic computer executing a corresponding computer program. Alternatively, the method may be implemented in a hybrid device environment including a classic computer and a quantum computer. For example, the method is implemented by a classic computer and a quantum computer cooperating with each other.

In the following method embodiments, for convenience of description, the description is provided by assuming that steps are performed by a computer device. It is to be understood that the computer device may be a classic computer, or may be a hybrid execution environment including a classic computer and a quantum computer. A type of the computer device is not limited in the embodiments of the present disclosure.

In addition, in the embodiments of the present disclosure, a controlled Z (CZ) quantum gate (CZ gate for short) is mainly used as an example to illustrate the technical solutions of the present disclosure. The technical solutions provided in the present disclosure adapt to not only optimization of the CZ gate, but also optimization of some other quantum gates, for example, some common single-bit quantum gates (such as Rx, Ry, and Rz quantum gates) and some other complex quantum gates.

FIG. 2 is a flowchart of a method for optimizing a quantum gate according to an exemplary embodiment of the present disclosure. All steps of the method may be performed by a computer device. The method may include the following steps (210 to 240).

In step 210, an initialized control external field corresponding to a quantum gate is obtained.

In the embodiments of the present disclosure, a control external field refers to a microwave drive applied to a quantum bit of a quantum gate, and the control external field may be a pulse waveform. The initialized control external field may be selected based on experience or experiments.

In the embodiments of the present disclosure, multiple iterative updates are performed on the control external field to optimize the control external field, and the optimized control external field is applied to the quantum bit of the quantum gate, thereby optimizing precision of the quantum gate.

The core of quantum gate optimization is to improve the precision. Precision, also referred to as fidelity, refers to the comparison between a measurement result and an ideal value. Experimentally, the precision of a quantum gate is generally measured by methods such as the QPT and randomized benchmarking measurement.

In step 220, the control external field is applied to the quantum bit of the quantum gate, and actual measurement data of the quantum gate is acquired. The actual measurement data is configured to reflect an actual characteristic of the quantum gate.

In an embodiment, the control external field is applied to the quantum bit of the quantum gate in the following manner: dividing the control external field by time to obtain a pulse waveform sequence, the pulse waveform sequence including pulse waveforms corresponding to multiple time instants; and applying the pulse waveforms corresponding to the multiple time instants to the quantum bit of the quantum gate. For example, in a case that the control external field is denoted as $\mu_A(t)$, $0 < t < T$, and the time $T$ is divided into $M$ parts ($\tau = T/M$), then the control external field $\mu_A(t)$ is discretized as:

$$\mu_A(t) \Rightarrow \{\mu_{A;1} = \mu_A(t = 0), \mu_{A;2} = \mu_A(\tau), \cdots, \mu_{A;M} = \mu_A\big((M-1)\tau\big)\} \quad (1).$$

In a case that the quantum gate is a single-bit quantum gate, the control external field may be applied to the single bit of the quantum gate. In a case that the quantum gate is a multibit quantum gate, the corresponding control external field may be applied to only one or some of multiple bits of the quantum gate. For example, for a two-bit CZ gate, the control external field may be applied to only one of the bits.

The quantum gate optimization solution provided in the embodiments of the present disclosure is a closed-loop optimization solution driven and implemented by data feedback. Therefore, after the control external field is applied to the quantum bit of the quantum gate, and the actual measurement data of the quantum gate is acquired through experiments. The actual measurement data is configured to reflect the actual characteristic of the quantum gate, so that the closed-loop optimization of the quantum gate (the control external field) is realized by utilizing the actual measurement data.

In an exemplary embodiment, the actual measurement data includes an actual gate operator corresponding to the quantum gate. In an embodiment, QPT is performed on the quantum gate to obtain a process matrix corresponding to the quantum gate; and based on the process matrix corresponding to the quantum gate, the actual gate operator of the quantum gate is determined.

The process matrix corresponding to the quantum gate is generally obtained through the QPT. The QPT is a technique for describing performance of a specific quantum gate, and can provide a visual image related to the process matrix. An ideal unitary evolution can be described directly by the mapping $\psi_f = U_{ideal}\psi(0)$ of quantum states. However, a non-ideal system with noise has to be described by using a density matrix. There is a process matrix-dependent mapping relationship between an input quantum state $\rho(0)$ and an output quantum state $\rho_f$, which is expanded into a superposition of a set of linear operators $\{B_i\}$:

$$\varepsilon\big(\rho(0)\big) = \rho_f = \sum_{i=1}^{d^2} B_i \rho(0) B_i^\dagger = \sum_{m,n} \chi_{mn} \tilde{E}_m \rho(0) \tilde{E}_n^{\;\dagger} \qquad (2).$$

In which, d represents a dimension of the system, $\{\tilde{E}_m, \tilde{E}_n\}$ represents a set of complete basis vectors and may consist of Pauli matrices, and $\chi_{mn}$ is a process matrix that describes all information of a specific quantum gate. A process matrix $\chi$ can be determined from a specific quantity of the input quantum states and the corresponding output quantum states based on the mapping relationship. A value of i in the formula (2) is an integer and ranges from 1 to $d^2$, inclusive.

In an embodiment, the process matrix obtained through the QPT measurement is estimated by using the Powell algorithm to find the actual gate operator of the quantum gate. The Powell algorithm is an accelerated algorithm based on a conjugate direction, and has a good optimization effect for a parameter dimension less than 20. For an objective function, a parameter vector in an N-dimensional space is $\overline{X}$. Starting from an initial guess value $\vec{X}_0^{(0)}$, in the $l$th iteration, there are $N$ determined search directions $\{\vec{h}_1^{(l)}, \ldots, \vec{h}_N^{(l)}\}$ pre-existing in a parameter space. In the $k(\leq N)$th iteration, starting from $\vec{X}_{k-1}^{(l)}$, a one-dimensional search is performed along the direction $\vec{h}_k^{(l)}$ to minimize the objective function. After searches in all of the $N$ directions are completed, a new direction is generated: $\vec{h}_{N+1}^{(l)} = \vec{X}_{N+1}^{(l)} - \vec{X}_0^{(l)}$, to replace one of the previous directions in $\{\vec{h}_k^{(l)}\}$. In the $(l + 1)$th iteration, $\vec{X}_0^{(l+1)} = \vec{X}_{N+1}^{(l)}$ is selected as an initial point, and a new set $\{\vec{h}_k^{(l+1)}\}$ functions as search direc-tions to perform iteration until a termination condition is met. This is the most primitive Powell algorithm, and such a direction update method is prone to result in linear correlation in an iteration. Consequently, a search process is carried out in a reduced dimensional space, and thus an optimal convergence value cannot be found. In view of this, a modified Powell algorithm is later provided, the core of which is to introduce a Powell condition as a criterion for determining whether the search direction needs to be adjusted and how to adjust the search direction, so as to achieve better results.

Experimentally, a behavior of a quantum gate is completely described by the process matrix $\chi$, which can be obtained through the QPT. Due to quantum dissipation and some other error sources, $\chi_{exp}$ that is experimentally determined always deviates from an ideal value. Therefore, it is almost impossible to accurately calculate a time evolution operator U corresponding to the quantum gate. However, a fitting method can be adopted to find a best estimate $U_{exp}$ (which is referred to as "the actual gate operator of the quantum gate"). The estimate functions as experimental measurement feedback in an optimization solution based on a gate operator. By constructing a constant matrix M (whose dimension is $N^2 \times N^2$) with a Pauli matrix as a basis vector, a relationship between a super operator U of a quantum gate and a process matrix $\tilde{\chi}$ of the quantum gate presented as a vector is established, that is $\tilde{\chi} = \mathrm{M}^{-1}\mathcal{U}$. $U_{exp}$ can be estimated relatively quickly by choosing the Powell algorithm. For a given quantum gate operator $U$, a parameter vector $\overline{X}$ in the N-dimensional space can be defined according to all of N independent elements $\{U_i\}$, that is, $\overline{X} \equiv \overline{X}(\{U_i\})$. The objective function is defined as a square difference between a process matrix of a quantum gate U and an experimental measurement value, that is, $\mathrm{F} = \left\| \chi(\mathrm{U}) - \chi_{exp} \right\|^2 = \left\| \chi(\mathrm{X}) - \chi_{exp} \right\|^2$. The parameter vector $\vec{X}$ corresponding to the quantum gate $U$ is optimized by the Powell algorithm to minimize the objective function, so as to find $U_{exp}$ which is closest to the process matrix $\chi_{exp}$ measured in an experiment.

In another exemplary embodiment, the actual measurement data includes an actual output density matrix corresponding to the quantum gate. In an embodiment, at least one selected input quantum state is obtained; the input quantum state is processed through the quantum gate to obtain an output quantum state; and QST is performed on the output quantum state to obtain the actual output density matrix corresponding to the quantum gate.

The quantum state can be determined by using a method of the QST. A basic principle of the QST is to project the quantum state to different directions through a series of revolving gates selected in advance. Based on probabilities measured in different projection directions and maximum likelihood estimation, a density matrix corresponding to the quantum state can be fitted. Therefore, by performing the QST on the output quantum state of the quantum gate, the actual output density matrix corresponding to the quantum gate can be obtained.

In step 230, a gradient of the control external field is calculated based on the actual measurement data and ideal data.

In the embodiments of the present disclosure, the gradient of the control external field is calculated based on the actual measurement data and ideal data, and then the control external field is updated according to the gradient. The ideal data is used for reflecting an ideal characteristic of the foregoing quantum gate. For example, in a case that the actual measurement data includes the actual gate operator of the quantum gate, the ideal data includes an ideal gate operator of the quantum gate. In another example, in a case that the actual measurement data includes the actual output density matrix of the quantum gate, the ideal data includes an ideal output density matrix of the quantum gate. The foregoing ideal data (such as the ideal gate operator, and the ideal output density matrix) may be set in advance according to a design of the quantum gate. The optimization algorithm based on gradient constraint has a faster optimization speed than an optimization algorithm without gradient constraints, thereby saving optimization costs.

In an embodiment, the step includes the following substeps 1 and 2.

In substep 1, a gradient calculation formula is derived according to an objective function and a waveform function corresponding to the control external field. The objective function is configured to characterize a difference between the actual measurement data and the ideal data, and the objective function is optimized to minimize a value of the objective function.

In substep 2, by using the gradient calculation formula, the gradient of the control external field is calculated based on the actual measurement data and the ideal data.

The objective function is related to precision of the quantum gate, and the objective function is constructed based on a manner of measuring the precision of the quantum gate. In addition, two solutions are provided in the present disclosure. One solution is an optimization solution based on a gate operator, and the other solution is an optimization solution based on a density matrix. Therefore, the corresponding objective functions and the corresponding gradient calculation formulas are different.

For the optimization solution based on the gate operator, the actual measurement data includes the actual gate operator of the quantum gate, and the objective function is:

$$\mathcal{F}_U = \left\| U_d^\dagger U_c - U_{CZ} \right\|^2 = 2 - \mathrm{Tr}\{U_c^\dagger U_d U_{CZ}\} - \mathrm{Tr}\{U_{CZ} U_d^\dagger U_c\} \qquad (3).$$

The corresponding gradient calculation formula is:

$$k_{U,m} = \frac{\partial \mathcal{F}_U}{\partial \mu_{A;m}} \qquad (4)$$

$$= -\mathrm{Tr}\left\{\frac{\partial U_c^\dagger}{\partial \mu_{A;m}} U_d U_{\mathrm{CZ}} + U_c^\dagger \frac{\partial U_d}{\partial \mu_{A;m}} U_{\mathrm{CZ}} + U_{\mathrm{CZ}} \frac{\partial U_d^\dagger}{\partial \mu_{A;m}} U_c + U_{\mathrm{CZ}} U_d^\dagger \frac{\partial U_c}{\partial \mu_{A;m}}\right\}$$

$$\approx -i\tau \mathrm{Tr}\left\{Q_{c;m} U_c^\dagger U_d U_{\mathrm{CZ}} - U_{\mathrm{CZ}} U_d^\dagger U_c Q_{c;m} + U_{\mathrm{CZ}} Q_{d;m} U_d^\dagger U_c - U_c^\dagger U_d Q_{d;m} U_{\mathrm{CZ}}\right\}$$

$$= 2\tau \mathrm{ImTr}\left\{Q_{c;m}\left(U_d^\dagger U_c\right)^\dagger U_{\mathrm{CZ}}\right\} + 2\tau \mathrm{ImTr}\left\{Q_{d;m}\left(U_d^\dagger U_c\right) U_{\mathrm{CZ}}\right\}.$$

In which, $U_c$ represents a total time evolution operator corresponding to the quantum gate, $U_d$ represents a time evolution operator corresponding to the quantum gate without interbit coupling, $U_{\mathrm{CZ}}$ represents an ideal gate operator corresponding to the quantum gate. $U_d^\dagger U_c$ is replaced by $U_{\mathrm{exp}}$. $U_{\mathrm{exp}}$ represents the actual gate operator of the quantum gate, $\tau = T/M$. $\mu_{A;m}$ represents the m-th pulse waveform in a pulse waveform sequence obtained by dividing a control external field $\mu_A$ by time. $Q_{c;m}$ represents a calculated value of a coupling term corresponding to the m-th pulse waveform. $Q_{d;m}$ represents a calculated value of a decoupling term corresponding to the m-th pulse waveform. Im represents an imaginary component of a complex number. $\|\ \|^2$ represents a square of an Euler norm, $\|R\|^2 = \mathrm{Tr}\{R^*R\}$. $\mathrm{Tr}\{A\}$ represents a trace of a matrix A, that is, a sum of diagonal elements.

For the optimization solution based on the density matrix, the actual measurement data includes the actual output density matrix corresponding to the quantum gate, and the objective function is:

$$\mathcal{F}_\rho = \|\rho_f - \rho_{\mathrm{ideal}}\|^2 = \mathrm{Tr}\left\{[\rho_f - \rho_{\mathrm{ideal}}]^\dagger [\rho_f - \rho_{\mathrm{ideal}}]\right\} \approx 2 - 2\mathrm{Tr}\{\rho_{\mathrm{ideal}}\rho_f\} \quad (5)$$

$$\approx 2 - 2\rho_{\mathrm{ideal}}^\dagger \rho_f = 2 - 2\rho_{\mathrm{ideal}}^\dagger \mathcal{U}_d^{-1} \mathcal{U}_c \rho(0).$$

The corresponding gradient calculation formula is:

$$k_{\rho;m} = \frac{\partial \mathcal{F}_\rho}{\partial \mu_{A;m}} = -2\rho_{\mathrm{ideal}}^\dagger \left[\frac{\partial \mathcal{U}_d^{-1}}{\partial \mu_{A;m}} \mathcal{U}_c + \mathcal{U}_d^{-1} \frac{\partial \mathcal{U}_c}{\partial \mu_{A;m}}\right]\rho(0) \qquad (6)$$

$$= 2i\tau \left[\rho_{\mathrm{ideal}}^\dagger \mathcal{Q}_{c;m} \mathcal{U}_d^{-1} \mathcal{U}_c \rho(0) - \rho_{\mathrm{ideal}}^\dagger \mathcal{Q}_{d;m} \mathcal{U}_d^{-1} \mathcal{U}_c \rho(0)\right].$$

In which, $\rho_f$ represents an output density matrix corresponding to the quantum gate. $\rho_{\mathrm{ideal}}$ represents an ideal output density matrix corresponding to the quantum gate. $\rho(0)$ represents an input density matrix corresponding to the quantum gate. $\mathcal{U}_c$ represents a time evolution super operator of a coupling term. $\mathcal{U}_d$ represents a time evolution super operator of a decoupling term. $\mathcal{U}_d^{-1} \mathcal{U}_c \rho(0)$ is replaced by $\rho_{f,\mathrm{exp}}$. $\rho_{f,\mathrm{exp}}$ represents an actual output density matrix corresponding to the quantum gate, $\tau = T/M$. $\mu_{A;m}$ represents the m-th pulse waveform in a pulse waveform sequence obtained by dividing the control external field $\mu_A$ by time. $Q_{c;m}$ represents a calculated value of a coupling term corresponding to the m-th pulse waveform. $Q_{d;m}$ represents a calculated value of a decoupling term corresponding to the m-th pulse waveform. In the formula (6), i represents an imaginary unit.

In step 240, the control external field is updated according to the gradient to obtain an updated control external field. The updated control external field is applied to the quantum bit of the quantum gate to optimize the precision of the quantum gate.

In an embodiment, an updated value is calculated according to the gradient and a learning rate; and an updated control external field is calculated according to a current control external field and the updated value. For example, the updated value is obtained by multiplying the gradient and the learning rate, and then the updated value is added to the current control external field to obtain the updated control external field. The learning rate is an empirical constant.

In addition, in the embodiments of the present disclosure, a quantum gate (a control external field) is optimized by using the GRAPE algorithm. In a case that the quantum gate does not meet an optimization end condition, step 220 is performed again by using the updated control external field as the current control external field; and the optimization process is ended in a case that the quantum gate meets the optimization end condition. In an embodiment, the optimization end condition includes at least one of the following: the actual characteristic of the quantum gate reflected by the actual measurement data reaches a set index, and a change of the control external field before and after the update is less than a set value.

In summary, the quantum gate optimization solution provided in the present disclosure is a closed-loop optimization solution driven and implemented by data feedback. In the present disclosure, an optimization algorithm based on gradient constraint is combined with actual measurement data. On the one hand, the control external field is optimized based on gradient constraint, an optimization time can be shortened and optimization costs can be reduced as compared with some optimization solution without gradient constraints. On the other hand, the actual measurement data of the quantum gate is acquired during the optimization process, and optimization is performed by using the actual measurement data as feedback, thereby ensuring the effect and precision of optimization. With reference to the foregoing two aspects, a quantum gate optimization solution that improves both the precision and efficiency is provided according to the present disclosure.

By using a CZ gate as an example, a process of optimizing the CZ gate by using the technical solution in the present disclosure is described below.

1. Non-adiabatic CZ gate

In a case that there is no control external field, a Hamiltonian of a two-bit system (*A, B*) can be expressed as:

$$H_0 = H_A \otimes I_B + I_A \otimes H_B + H_{int} \qquad (7).$$

In which, $H_{i=A,B}$ represents a Hamiltonian of a single bit, $I_{i=A,B}$ represents a unit operator, and $H_{int}$ represents interaction between two bits. The CZ gate is implemented by a second excited state of one of the bits. A three-level single-bit Hamiltonian ($\hbar = 1$, where $\hbar$ represents a reduced Planck constant, which is set to be 1 in a natural unit for convenience) is expressed as:

$$H_{i=A,B} = \omega_i |1_i\rangle\langle 1_i| + (2\omega_i + \Delta_i)|2_i\rangle\langle 2_i| \qquad (8).$$

For each bit *(i = A, B)*, $\omega_i$ and $\Delta_i$ respectively represent a resonant frequency and anharmonicity of the bit. A parameter example of an experimental bit sample is provided herein, that is, $\omega_A/2\pi$ = 5.176 GHz, $\omega_B/2\pi$ = 4.438 GHz, and $\Delta_A/2\pi$ = -245.2 MHz, $\Delta_B/2\pi$ = -255.5 MHz.

In addition, an interaction Hamiltonian of the two-bit system (*A, B*) is:

$$H_{int} = g(a_A^+ \otimes a_B^- + a_A^- \otimes a_B^+) \qquad (9)/$$

In which, $a_{i=A,B}^+ = \sum_{j=0}^{1} \sqrt{j+1}\,|(j+1)_i\rangle\langle j_i|$ and $a_{i=A,B}^- = \sum_{j=1}^{2} \sqrt{j}\,|(j-1)_i\rangle\langle j_i|$ respectively represent an ascending operator and a descending operator, and *g* represents coupling strength between the two bits. A parameter example of an experimental sample is $g/2\pi$ = 8.5 MHz.

Due to a weak coupling condition (*g* << |$\omega_A$ - $\omega_B$|) between the two bits, a probability exchange between the two bits is basically negligible in a case that there is no control external field. However, in a case that a control external field in a z direction is applied, a resonance environment can be created for the two bits. The control external field can be expressed as:

$$H_{ext}(t) = \mu_A(t)P_A \qquad (10).$$

In which, $P_A = n_A \otimes I_B$, $n_A = \sum_{j=0}^{2} j\,|j_A\rangle\langle j_A|$. $I_B$ indicates that no operation is applied to a bit B, which corresponds to an identity matrix. $P_A$ represents a constant matrix with only diagonal elements. $|j_A\rangle$ and $\langle j_A|$ respectively represent basis vectors of a bit A, $|j_A\rangle$ represents a right basis vector, and $\langle j_A|$ represents a left basis vector. Therefore, a total coupling Hamiltonian is $H_c(t) = H_0(g) + H_{ext}(t)$. In a case that the control external field is $\mu_A(t) = \mu_{A;r} = \omega_B - \omega_A - \Delta_A$, the two-bit system resonates between $|1_A1_B\rangle$ and $|2_A0_B\rangle$. For convenience of describing, any state $|j_Aj_B'\rangle$ is abbreviated as | $jj'\rangle$ below, a letter at a first position represents the bit A, and a letter at a second position represents the bit B.

Under such a control external field, the two-bit system can be reduced to a 5-level status for processing. In a simplified 5-level Hilbert space {$|00\rangle$, $|10\rangle$, $|01\rangle$, $|11\rangle$, $|20\rangle$}, the Hamiltonian of the two-bit quantum system $H_c(t)$ can be expressed as:

$$H_c(t) = 0|00\rangle\langle 00| + [\omega_A + \mu_A(t)]|10\rangle\langle 10| + \omega_B|01\rangle\langle 01| + [\omega_A + \mu_A(t) + \omega_B]|11\rangle\langle 11| + [2(\omega_A + \mu_A(t)) + \Delta_A]|20\rangle\langle 20| + \sqrt{2}g[|11\rangle\langle 20| + |20\rangle\langle 11|] \quad (11).$$

The coupling between $|10\rangle$ and $|01\rangle$ is neglected here.

Under a resonance condition $\mu_A(t) = \mu_{A;r} = \omega_B - \omega_A - \Delta_A$, the foregoing Hamiltonian $H_c(t)$ can be simplified ito:

$$H_c(t) = 0|00\rangle\langle 00| + [\omega_A + \mu_{A;r}]|10\rangle\langle 10| + \omega_B|01\rangle\langle 01| + [\omega_A + \mu_{A;r} + \omega_B][|11\rangle\langle 11| + |20\rangle\langle 20|] + \sqrt{2}g[|11\rangle\langle 20| + |20\rangle\langle 11|] \quad (12).$$

In addition, an auxiliary Hamiltonian $H_d(t)$ without interqubit coupling (g = 0) can be given by the following formula:

$$H_d(t) = 0|00\rangle\langle 00| + [\omega_A + \mu_{A;r}]|10\rangle\langle 10| + \omega_B|01\rangle\langle 01| + [\omega_A + \mu_{A;r} + \omega_B][|11\rangle\langle 11| + |20\rangle\langle 20|] \quad (13).$$

Next, time evolution operators, $U_c = \exp(-iH_cT)$ and $U_d = \exp(-iH_dT)$, are constructed, where $i$ represents an imaginary unit. Coupling effect of the Hamiltonian $H_c$ given by the formula (12) only exists in $|11\rangle$ and $|20\rangle$. In a two-dimensional subspace formed by $|11\rangle$ and $|20\rangle$, two operators are introduced, $I_2 = |11\rangle\langle 11| + |20\rangle\langle 20|$ and $X_2 = |11\rangle\langle 20| + |20\rangle\langle 11|$. Therefore, the Hamiltonian in the 2×2 subspace can be expressed as:

$$H_{sub} = [\omega_A + \mu_{A;r} + \omega_B]I_2 + \sqrt{2}gX_2 \quad (14).$$

In a time period T, a corresponding time evolution operator can be expressed as:

$$U_{sub} = e^{-i(\phi_A + \phi_B)}\exp(-i\sqrt{2}gTX_2) \quad (15).$$

In which, $\phi_A = (\omega_A + \mu_{A;r})T$, $\phi_B = \omega_BT$, and $i$ represents an imaginary unit. The second term on the right side of the formula (15) represents a rotation operator, which can be expanded into:

$$\exp(-i\sqrt{2}gTX_2) = \cos(\sqrt{2}gT)I_2 - i\sin(\sqrt{2}gT)X_2 \quad (16).$$

In a case that the evolution time is a half period, that is, $T = \pi/\sqrt{2}g$, the time evolution operator of the two-dimensional subspace can be expressed as:

$$U_{sub} = -e^{-i(\phi_A + \phi_B)}I_2 = -e^{-i(\phi_A + \phi_B)}[|11\rangle\langle 11| + |20\rangle\langle 20|] \quad (17).$$

Therefore, the total time evolution operator is:

$$U_c = |00\rangle\langle 00| + e^{-i\phi_A}|10\rangle\langle 10| + e^{-i\phi_B}|01\rangle\langle 01| - e^{-i(\phi_A + \phi_B)}[|11\rangle\langle 11| + |20\rangle\langle 20|] \quad (18).$$

In addition, a time evolution operator without coupling is:

$$U_d = |00\rangle\langle 00| + e^{-i\phi_A}|10\rangle\langle 10| + e^{-i\phi_B}|01\rangle\langle 01| + e^{-i(\phi_A + \phi_B)}[|11\rangle\langle 11| + |20\rangle\langle 20|] \quad (19).$$

A time evolution operator with a trivial dynamic phase removed is:

$$U_{CZ} = U_d^\dagger U_c = |00\rangle\langle 00| + |10\rangle\langle 10| + |01\rangle\langle 01| - |11\rangle\langle 11| - |20\rangle\langle 20| \quad (20).$$

In a case that an initial state is selected only from a subspace $\{|00\rangle, |10\rangle, |01\rangle, |11\rangle\}$, the last term on the right side of the formula (20) is negligible, and the time evolution operator becomes an ideal CZ gate.

2. Optimization solution based on a gate operator

Due to inevitable errors in an evolution process, a simple square pulse ($\mu_A(0 < t < T) = \mu_{A;r}$) as a control external field cannot generate a high-fidelity CZ gate. Therefore, a form of a control external field $\mu_A(t)$ needs to be modified. In this case, two Hamiltonians, $H_c(t)$ and $H_d(t)$ are time-dependent, and corresponding time evolution operators need to be modified as $U_c(t) = T_+ \exp\left[-i \int_0^T H_c(t) dt\right]$ and $U_d(t) = T_+ \exp\left[-i \int_0^T H_d(t) dt\right]$. $T_+$ represents a forward propagation timing operator, and $i$ represents an imaginary unit. For convenience, the time $T$ is divided into $M$ parts ($\tau = T/M$), and the control external field $\mu_A(t)$ is discretized as:

$$\mu_A(t) \Rightarrow \left\{\mu_{A;1} = \mu_A(t=0), \mu_{A;2} = \mu_A(\tau), \cdots, \mu_{A;M} = \mu_A\big((M-1)\tau\big)\right\} \quad (21).$$

The Hamiltonian $H_c(t)$ can be discretized into:

$$H_{c;m=1,2,\cdots,M} = 0|00\rangle\langle00| + \left[\omega_A + \mu_{A;m}\right]|10\rangle\langle10| + \omega_B|01\rangle\langle01| \quad (22).$$
$$+ \left[\omega_A + \mu_{A;m} + \omega_B\right]|11\rangle\langle11| + \left[2\big(\omega_A + \mu_{A;m}\big) + \Delta_A\right]|20\rangle\langle20|$$
$$+ \sqrt{2}g\big[|11\rangle\langle20| + |20\rangle\langle11|\big].$$

The decoupling Hamiltonian $H_d(t)$ can be discretized into:

$$H_{d;m=1,2,\cdots,M} = 0|00\rangle\langle00| + \left[\omega_A + \mu_{A;m}\right]|10\rangle\langle10| + \omega_B|01\rangle\langle01| \quad (23).$$
$$+ \left[\omega_A + \mu_{A;m} + \omega_B\right]|11\rangle\langle11| + \left[2\big(\omega_A + \mu_{A;m}\big) + \Delta_A\right]|20\rangle\langle20|.$$

The corresponding two time evolution operators become:

$$U_c = U_{c;M} U_{c;M-1} \cdots U_{c;2} U_{c;1} \quad (24)$$

$$U_d = U_{d;M} U_{d;M-1} \cdots U_{d;2} U_{d;1} \quad (25).$$

In which, $U_{c;m} = \exp(-iH_{c;m}\tau)$, $U_{d;m} = \exp(-iH_{d;m}\tau)$, $i$ represents an imaginary unit, and the time evolution operator $U = U_d^\dagger U_c$ with a trivial dynamic phase removed is a CZ gate $U_{CZ}$ that needs to be optimized.

In the optimization solution based on the gate operator, an objective function is defined as:

$$\mathcal{F}_U = \left\|U_d^\dagger U_c - U_{CZ}\right\|^2 = 2 - \mathrm{Tr}\left\{U_c^\dagger U_d U_{CZ}\right\} - \mathrm{Tr}\left\{U_{CZ} U_d^\dagger U_c\right\} \quad (26).$$

Due to discretization of the control external field $\mu_A(t)$, $\mathcal{F}_U$ is a function of all pulse amplitudes, that is, $\mathcal{F}_U = \mathcal{F}_U(\mu_{A;1}, \mu_{A;2}, \cdots, \mu_{A;M})$. For the m-th amplitude $\mu_{A;m}$, a gradient of the objective function is:

$$k_{U,m} = \frac{\partial \mathcal{F}_U}{\partial \mu_{A;m}} \quad (27)$$

$$= -\mathrm{Tr}\left\{\frac{\partial U_c^\dagger}{\partial \mu_{A;m}} U_d U_{CZ} + U_c^\dagger \frac{\partial U_d}{\partial \mu_{A;m}} U_{CZ} + U_{CZ} \frac{\partial U_d^\dagger}{\partial \mu_{A;m}} U_c + U_{CZ} U_d^\dagger \frac{\partial U_c}{\partial \mu_{A;m}}\right\}.$$

An optimization condition is $\partial \mathcal{F}_U / \partial \mu_{A;m} = 0$, where m=1, 2,..., M. To meet the optimization condition, the gradient in the formula (27) is expanded. A partial derivative of the $U_c$ part is:

$$\frac{\partial U_c}{\partial \mu_{A;m}} = U_{c;M} \cdots U_{c;m+1} \frac{\partial U_{c;m}}{\partial \mu_{A;m}} U_{c;m-1} \cdots U_{c;1} \qquad (28).$$

To calculate $\partial U_{c;m}/\partial \mu_{A;m}$, the time evolution operator needs to be expanded as:

$$U_{c;M} = I - i\tau H_{c;m} - \tau^2 H_{c;m}^2/2 - \cdots \qquad (29).$$

In addition, the result is applied to obtain:

$$\frac{\partial H_{c;m}^n}{\partial \mu_{A;m}} = \frac{\partial H_{c;m}}{\partial \mu_{A;m}} H_{c;m}^{n-1} + H_{c;m} \frac{\partial H_{c;m}}{\partial \mu_{A;m}} H_{c;m}^{n-2} + \cdots \qquad (30).$$

Under a normal circumstance, $\partial H_{c;m}/\partial \mu_{A;m}$ and $H_{c;m}$ are not commutative. For numerical calculations, an acceptable approximation is adopted in the present disclosure:

$$\frac{\partial H_{c;m}^n}{\partial \mu_{A;m}} \approx n \frac{\partial H_{c;m}}{\partial \mu_{A;m}} H_{c;m}^{n-1} \qquad (31).$$

By using the above result, the formula (28) can be simplified into:

$$\frac{\partial U_c}{\partial \mu_{A;m}} \approx -i\tau U_{c;M} \cdots U_{c;m+1} \frac{\partial H_{c;m}}{\partial \mu_{A;m}} U_{c;m} U_{c;m-1} \cdots U_{c;1} \quad (32).$$

Two variables, $P_A = \partial H_{c;m}/\partial \mu_{A;m} = n_A \otimes I_B$ and $R_{c;m} = U_{c;m} U_{c;m-1} \cdots U_{c;1}$, are introduced, so that the formula (32) can be changed into:

$$\frac{\partial U_c}{\partial \mu_{A;m}} \approx -i\tau U_c R_{c;m}^\dagger P_A R_{c;m} = -i\tau U_c Q_{c;m} \qquad (33).$$

In which, $Q_{c;m}$ represents a calculated value of a coupling term corresponding to the m-th pulse waveform, $Q_{c;m} = R_{c;m}^\dagger P_A R_{c;m}$. A partial derivative of $U_d$ can be obtained using the same method as follows:

$$\frac{\partial U_d}{\partial \mu_{A;m}} \approx -i\tau U_c Q_{d;m} \qquad (34).$$

In which, $Q_{d;m}$ represents a calculated value of a decoupling term corresponding to the m-th pulse waveform, $Q_{d;m} = R_{d;m}^\dagger P_A R_{d;m}$, $R_{d;m} = U_{d;m} U_{d;m-1} \cdots U_{d;1}$. The formula (33) and the formula (34) are substituted into the formula (27) to obtain:

$$k_{U;m} \approx -i\tau \mathrm{Tr}\left\{ Q_{c;m} U_c^\dagger U_d U_{\mathrm{CZ}} - U_{\mathrm{CZ}} U_d^\dagger U_c Q_{c;m} + U_{\mathrm{CZ}} Q_{d;m} U_d^\dagger U_c - U_c^\dagger U_d Q_{d;m} U_{\mathrm{CZ}} \right\}$$

$$= 2\tau \mathrm{Im}\mathrm{Tr}\left\{ Q_{c;m} \left( U_d^\dagger U_c \right)^\dagger U_{\mathrm{CZ}} \right\} + 2\tau \mathrm{Im}\mathrm{Tr}\left\{ Q_{d;m} \left( U_d^\dagger U_c \right) U_{\mathrm{CZ}} \right\} \qquad (35).$$

In which, Im represents an imaginary component of a complex number, and i represents an imaginary unit.

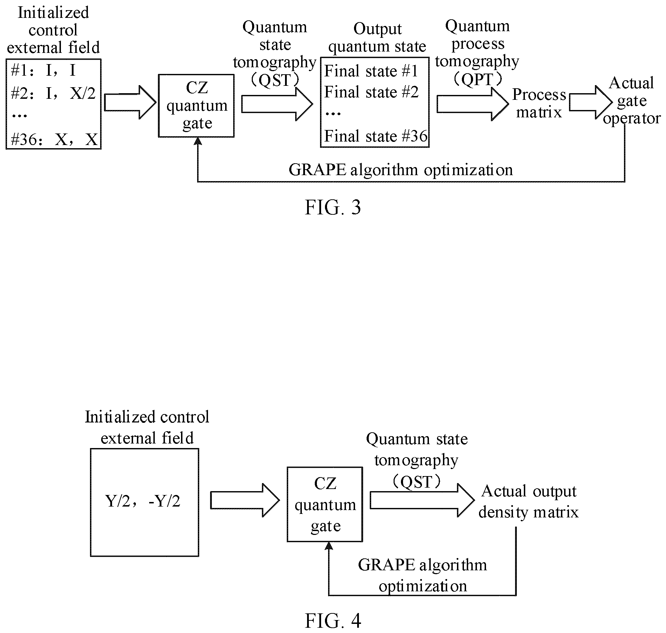

Because it is difficult to solve $k_{U,m=1,2\cdots,M} = \frac{\partial \mathcal{F}_U}{\partial \mu_{A;m}} = 0$ by an analysis method directly, a GRAPE method based on iterative updating is adopted in the present disclosure, and a process thereof is shown in FIG. 3. The solution starts from an initial guess waveform (for example, a flattop waveform or another suitable waveform may be selected experimentally), $\boldsymbol{\mu}_A^{(0)} = \{\mu_{A;1}^{(0)}, \cdots, \mu_{A;M}^{(0)}\}$. In the $l^{\mathrm{th}}$ iteration step, a gradient in the step is calculated,

$$k_U^{(l)} = \{k_{U,1}^{(l)}, \cdots, k_{U,M}^{(l)}\}$$, and iteration is performed through linear propagation as follows:

$$\mu_{A;m}^{(l+1)} = \mu_{A;m}^{(l)} + \alpha_U k_{U,m}^{(l)} \qquad (36).$$

In which, a learning rate $\alpha_U$ is an empirical constant updated through a series of iterations:

$$\cdots \rightarrow \mu^{(l)} \rightarrow k^{(l)} \rightarrow \mu^{(l+1)} \rightarrow \cdots,$$

so that finally the gradient $k_U^{(l)} \approx \mathbf{0}$, which means that the waveform is close to an optimal value $\mu_{\mathrm{opt}}$, and basically does not change any more $(\mu_A^{(l+1)} \approx \mu_A^{(l)})$. However, first, the formula (36) is just the simplest model, and other more complex models may be chosen; second, for high-dimensional optimization problems, it is also important to choose an initial value; third, although the optimized waveform can be obtained purely through numerical calculations, such a waveform does not necessarily lead to a high-precision CZ gate in an actual experiment since there are often some uncontrollable errors in the experiment.

Therefore, a data-driven method is adopted in the present disclosure to partially avoid the foregoing third problem. The term "partially avoid" here means that some parameters in the experiment, such as a coupling strength calibration error and a waveform generation error, can be reduced through optimization as much as possible. However, inherent defects of a bit, such as an excessively short decoherence time, cannot be prevented. Experimentally, a feasible manner is provided, a process matrix measured through QPT is estimated by using he Powell algorithm, so as to find the actual gate operator $U_{\mathrm{exp}}$. Therefore, in the $l^{\mathrm{th}}$ iteration step, the formula (35) may be changed to:

$$k_{U;m}^{(l)} \approx 2\tau \mathrm{ImTr}\left\{Q_{c;m}^{(l)}\left(U_{\mathrm{exp}}^{(l)}\right)^\dagger U_{\mathrm{CZ}}\right\} + 2\tau \mathrm{ImTr}\left\{Q_{d;m}^{(l)} U_{\mathrm{exp}}^{(l)} U_{\mathrm{CZ}}\right\} \qquad (37).$$

This is, the gradient is combined with feedback of experimental measurement data, the quantum gate is updated by using the experimental results, thereby converging more effectively, and thus improving the final precision of the quantum gate.

3. Lindblad master equation and representation thereof in a Liouville space

In view of dissipation, the time evolution of a density matrix is represented by a Lindblad master equation:

$$\dot{\rho}(t) = -i[H(t), \rho(t)] + \sum_s \left(L_s \rho(t) L_s^\dagger - \tfrac{1}{2}\{\rho(t), L_s^\dagger L_s\}\right) \qquad (38).$$

In which, $H(t)$ represents a total system Hamiltonian, and $\{L_s\}$ represents a set of Lindblad operators indicating dissipation. For two arbitrary operators, A and B in a Hilbert space, $[A, B] = AB - BA$, and $\{A, B\} = AB + BA$, which are respectively expressed as a commutation relationship and an anti-commutation relationship. In which, i represents an imaginary unit.

To facilitate derivation and numerical calculations, concepts of the Liouville space and the Liouville super operator are introduced. In the Hilbert space with $\{|i\rangle\}$ as a basis vector group, the density matrix is expanded into:

$$\rho = \sum_{i,j} \rho_{ij} |i\rangle\langle j| \qquad (39).$$

In the Liouville space, the foregoing matrix is converted into a vector form:

$$\rho = \sum_{i,j} \rho_{ij} |i,j\rangle\rangle \qquad (40).$$

The foregoing formula is defined based on a new basis vector group $\{|i,j\rangle\rangle\}$, and there is a one-to-one correspondence $|i, j\rangle\rangle \Leftrightarrow |i\rangle\langle j|$. A complex conjugate term $|i, j\rangle\rangle^\dagger = \langle\langle i, j| \Leftrightarrow |j\rangle\langle i|$ thereof is introduced, and an inner product thereof is:

$$\langle\langle i, j | i', j' \rangle\rangle \equiv \mathrm{Tr}\{|j\rangle\langle i|i'\rangle\langle j'|\} = \delta_{i,i'}\delta_{j,j'} \qquad (41).$$

An outer product thereof is: $|i, j\rangle\rangle\langle\langle k, l|$. A unit operator (matrix) in the Liouville space is expanded into:

$$\mathcal{J} = \Sigma_{i,j} |i,j\rangle\rangle\langle\langle i,j| \qquad (42).$$

Then, an arbitrary Liouville super operator $\mathcal{L}$ is constructed, and a matrix form of which is as follows:

$$\mathcal{L} = \Sigma_{i,j,k,l} \; \mathcal{L}_{i,j;k,l} |i,j\rangle\rangle\langle\langle k, l| \qquad (43).$$

In which, $\mathcal{L}_{i,j;k,l} = \langle\langle i,j|\mathcal{L}|k, l\rangle\rangle$. To illustrate the application of the Liouville super operator, two examples are provided below.

(a) Commutator of a system Hamiltonian

For a general N-dimensional Hilbert space, the system Hamiltonian may be expanded into $H = \Sigma_{i,j} H_{i,j} |i\rangle\langle j|$. In the Hilbert space, the commutator is expressed as:

$$H\rho - \rho H = \sum_{i,j,k} (H_{i,k}\rho_{k,j} - \rho_{i,k}H_{k,j}) \, |i\rangle\langle j| = \sum_{i,j,k,l} (H_{i,k}\delta_{j,l} - H_{l,j}\delta_{i,k}) \, \rho_{k,l}|i\rangle\langle j| \quad (44).$$

The formula (40) and formula (41) are applied, and the foregoing formula in the Liouville space can be changed into:

$$L_{sys}\rho = H\rho - \rho H = \left[ \sum_{i,j,k,l} \left( H_{i,k}\delta_{j,l} - H_{l,j}\delta_{i,k} \right) |i,j\rangle\rangle\langle\langle k,l| \right]\left[ \sum_{k',l'} \rho_{k',l'} \left| k',l' \right\rangle\rangle \right] \quad (45).$$

Therefore, a matrix form of the commutation relationship of the system Hamiltonian is as follows:

$$L_{sys} = \sum_{i,j,k,l} \left( H_{i,k}\delta_{j,l} - H_{l,j}\delta_{i,k} \right) |i,j\rangle\rangle\langle\langle k,l| \qquad (46).$$

(b) Dissipation caused by a Lindblad operator $L_s$

A dissipation term of the Lindblad equation in the formula (38) can be expanded into:

$$\mathcal{L}_s\rho = L_s\rho L_s^\dagger - \frac{1}{2}\{\rho, L_s^\dagger L_s\} \qquad (47)$$

$$= \sum_{i,j,k,l} \left[ L_{s;i,k}\rho_{k,l}L_{s;l,j}^\dagger - \frac{1}{2}\rho_{i,k}\left(L_s^\dagger L_s\right)_{k,j} - \frac{1}{2}\left(L_s^\dagger L_s\right)_{i,k}\rho_{k,j} \right] |i\rangle\langle j|$$

$$\Rightarrow \Sigma_{i,j,k,l} \left[ L_{s;i,k}L_{s;l,j}^\dagger - \frac{1}{2}\left(L_s^\dagger L_s\right)_{l,j}\delta_{i,k} - \frac{1}{2}\left(L_s^\dagger L_s\right)_{i,k}\delta_{l,j} \right] \rho_{k,l}|i,j\rangle\rangle.$$

The corresponding Liouville super operator is expressed as:

$$\mathcal{L}_s = \sum_{i,j,k,l} \left[ L_{s;i,k} L_{s;l,j}^\dagger - \frac{1}{2} \left( L_s^\dagger L_s \right)_{l,j} \delta_{i,k} - \frac{1}{2} \left( L_s^\dagger L_s \right)_{i,k} \delta_{l,j} \right] |i,j\rangle\rangle\langle\langle k,l| \quad (48).$$

For an energy relaxation part of a single quantum bit ($N(\geq 2)$), the Lindblad operator is expressed as:

$$L_{\text{relax}} = \sum_j \sqrt{\frac{j}{T_1}} |j-1\rangle\langle j| \qquad (49).$$

The corresponding Liouville super operator is expressed as:

$$\mathcal{L}_{\text{relax}} = \sum_{i,j,k,l} \frac{1}{T_1} \left[ \sqrt{kl} \delta_{i+1,k} \delta_{j+1,l} - \frac{1}{2}(i+l)\delta_{i,k}\delta_{j,l} \right] |i,j\rangle\rangle\langle\langle k,l| \quad (50).$$

For a phase relaxation part of a single quantum bit, the Lindblad operator is expressed as:

$$L_{\text{deph}} = \sum_j \sqrt{\frac{2}{T_\phi}} j |j\rangle\langle j| \qquad (51).$$

The corresponding Liouville super operator is expressed as:

$$\mathcal{L}_{\text{deph}} = \sum_{i,j,k,l} -\frac{1}{T_\phi}(i-l)^2 \delta_{i,k}\delta_{j,l} |i,j\rangle\rangle\langle\langle k,l| \qquad (52).$$

In summary, the Liouville super operator corresponding to a total dissipation term of a single quantum bit is:

$$\mathcal{L}_{\text{diss}} = \sum_{i,j;k,l} \left[ \frac{1}{T_1}\sqrt{kl}\delta_{i+1,k}\delta_{j+1,l} - \left( \frac{(i-l)^2}{T_\phi} + \frac{(i+l)}{2T_1} \right) \delta_{i,k}\delta_{j,l} \right] |i,j\rangle\rangle\langle\langle k,l| \quad (53).$$

A specific expression of the Liouville super operator is substituted into the Lindblad equation, to obtain a matrix equation that the density matrix evolves with time as follows:

$$\dot{\rho}(t) = -i\mathcal{L}(t)\rho(t) \qquad (54).$$

The total Liouville super operator $\mathcal{L}(t)$ includes a system part $\mathcal{L}_{\text{sys}}(t)$ and a dissipative part $\mathcal{L}_{\text{diss}}$, that is $\mathcal{L}(t) = \mathcal{L}_{\text{sys}}(t) + i\sum \mathcal{L}_{\text{diss}}$. A solution to the formula (50) is:

$$\rho(T) = \mathcal{U}(T)\rho(0), \mathcal{U}(T) = T_+ \exp\left[ -i\int_0^T \mathcal{L}(t)dt \right] \qquad (55).$$

In which, $\mathcal{U}(T)$ represents a super operator that a density matrix in the Liouville space evolves with time, and i represents an imaginary unit.

4. Optimization solution based on a density matrix

Another optimization solution provided in the present disclosure is implemented based on the formula (54) and the formula (55). For a two-quantum bits system in an experiment, either a 5-dimensional Hilbert space with $\{|00\rangle, |10\rangle, |01\rangle, |11\rangle, |20\rangle\}$ as a basis vector or a more comprehensive 9-dimensional Hilbert space with $\{|i_A(=0,1,2)i_B(=0,1,2)\rangle\}$ as a basis vector may be considered. Similar to a processing method of the solution 1, two Hamiltonians, $H_c(t) = H_0(g) + H_{\text{ext}}(\mu_A(t))$ and $H_d(t) = H_0(g=0) + H_{\text{ext}}(\mu_A(t))$ are introduced in this solution, and correspondingly two Liouville super operators $\mathcal{L}_c(t)$ and $\mathcal{L}_d(t)$ are constructed. By measuring dynamic phases $\phi_A(T)$ and $\phi_B(T)$, additional operators on $H_d(t)$ can be effectively obtained. Therefore, $\mathcal{L}_c(t)$ includes a dissipation term, and $\mathcal{L}_d(t)$ does not include a dissipation term. In addition, discretization of an external field, that is, $\mu_A(t) \Rightarrow \{\mu_{A;2}, \mu_{A;2}, \cdots, \mu_{A;M}\}$, generates two sets of Liouville super operators, which are expressed as follows:

$$\mathcal{L}_c(t) \Rightarrow \{\mathcal{L}_{c;1}, \mathcal{L}_{c;2}, \cdots, \mathcal{L}_{c;M}\} \qquad (56)$$

$$\mathcal{L}_d(t) \Rightarrow \{\mathcal{L}_{d;1}, \mathcal{L}_{d;2}, \cdots, \mathcal{L}_{d;M}\} \qquad (57).$$

The two time evolution super operators are expressed as follows:

$$\mathcal{U}_c = \mathcal{U}_{c;M}\mathcal{U}_{c;M-1}\cdots\mathcal{U}_{c;2}\mathcal{U}_{c;1} \qquad (58)$$

$$\mathcal{U}_d = \mathcal{U}_{d;M}\mathcal{U}_{d;M-1}\cdots\mathcal{U}_{d;2}\mathcal{U}_{d;1} \qquad (59).$$

In the foregoing formula, $\mathcal{U}_c$ represents the time evolution super operator of a coupling term, and $\mathcal{U}_d$ represents the time evolution super operator of a decoupling term:

$$\mathcal{U}_{c;m} = \exp[-i\mathcal{L}_{c;m}\tau] \qquad (60)$$

$$\mathcal{U}_{d;m} = \exp[-i\mathcal{L}_{d;m}\tau] \qquad (61).$$

Each short period of time is $\tau = T/M$, and $i$ represents an imaginary unit.

In the optimization solution based on a density matrix, a particular initial state may be selected, for example, $\varphi(0) = (|0\rangle + |1\rangle) \otimes (|0\rangle - |1\rangle)/2$ and $\rho(0) = \varphi(0)\varphi^\dagger(0)$, and whether a final state $\rho_f(T) = \mathcal{U}_d^{-1}\mathcal{U}_c\rho(0)$ is consistent with an ideal result $\rho_{\text{ideal}} = U_{\text{CZ}}\rho(0)U_{\text{CZ}}^\dagger$ is checked. In the Hilbert space, a following objective function is introduced in the present disclosure:

$$\mathcal{F}_\rho = \|\rho_f - \rho_{\text{ideal}}\|^2 = \text{Tr}\{[\rho_f - \rho_{\text{ideal}}]^\dagger[\rho_f - \rho_{\text{ideal}}]\} \approx 2 - 2\text{Tr}\{\rho_{\text{ideal}}\rho_f\} \quad (62).$$

$\rho_f^\dagger = \rho_f$, $\rho_{\text{ideal}}^\dagger = \rho_{\text{ideal}}$, and $\text{Tr}\{\rho_{\text{ideal}}^2\} = 1$ are applied to derivation of the formula (62). An actual final state is usually a mixed state. However, in the experiments, a weak dissipation condition leads to a better approximation, that is $\text{Tr}\{\rho_f^2\} \approx 1$. Next, the formula (62) is converted into an inner product in the Liouville space:

$$\mathcal{F}_\rho \approx 2 - 2\rho_{\text{ideal}}^\dagger\rho_f = 2 - 2\rho_{\text{ideal}}^\dagger\mathcal{U}_d^{-1}\mathcal{U}_c\rho(0) \qquad (63).$$

Similarly, minimization of $\mathcal{F}_\rho$ is controlled by a condition $\{\partial\mathcal{F}_\rho/\partial\mu_{A;m=1,2,\cdots,M} = 0\}$. For the m-th pulse amplitude, a corresponding gradient is:

$$k_{\rho;m} = \frac{\partial\mathcal{F}_\rho}{\partial\mu_{A;m}} = -2\rho_{\text{ideal}}^\dagger\left[\frac{\partial\mathcal{U}_d^{-1}}{\partial\mu_{A;m}}\mathcal{U}_c + \mathcal{U}_d^{-1}\frac{\partial\mathcal{U}_c}{\partial\mu_{A;m}}\right]\rho(0) \qquad (64).$$

The following approximation is used:

$$\partial\mathcal{U}_{c;m}/\partial\mu_{A;m} \approx -i\tau(\partial\mathcal{L}_{c;m}/\partial\mu_{A;m})\mathcal{U}_{c;m} \qquad (65)$$

$$\partial\mathcal{U}_{d;m}^{-1}/\partial\mu_{A;m} \approx i\tau\mathcal{U}_{d;m}^{-1}(\partial\mathcal{L}_{d;m}/\partial\mu_{A;m}) \qquad (66).$$

In addition, the condition $\partial\mathcal{L}_{c;m}/\partial\mu_{A;m} = \partial\mathcal{L}_{d;m}/\partial\mu_{A;m} = \mathcal{P}_A$ is used, where $\mathcal{P}_A = [n_A \otimes I_B, \cdots]$, and the formula (64) is simplified to:

$$k_{\rho;m} = 2i\tau\left[\rho_{\text{ideal}}^{\dagger}\mathcal{Q}_{c;m}\mathcal{U}_d^{-1}\mathcal{U}_c\rho(0) - \rho_{\text{ideal}}^{\dagger}\mathcal{Q}_{d;m}\mathcal{U}_d^{-1}\mathcal{U}_c\rho(0)\right] \quad (67).$$

In the foregoing formula, $Q_{c;m}$ represents a calculated value of a coupling term corresponding to the m-th pulse waveform, $Q_{d;m}$ represents a calculated value of a decoupling term corresponding to the m-th pulse waveform, and i represents an imaginary unit:

$$\mathcal{Q}_{c;m} = \mathcal{R}_{c;m}^{-1}\mathcal{P}_A\mathcal{R}_{c;m} \quad (68)$$

$$\mathcal{Q}_{d;m} = R_{d;m}^{-1}\mathcal{P}_A\mathcal{R}_{d;m} \quad (69)$$

and

$$\mathcal{R}_{c;m} = \mathcal{U}_{c;m+1}^{-1}\cdots\mathcal{U}_{c;M}^{-1}\mathcal{U}_d \quad (70)$$

$$\mathcal{R}_{d;m} = \mathcal{U}_{d;m}\cdots\mathcal{U}_{d;1} \quad (71).$$

It should be noted that, two items in brackets on the right side of the equation in the formula (67) are pure imaginary numbers, thereby ensuring that a gradient $k_{\rho;m}$ is a real number.

Similarly, an optimization condition $k_{\rho,m=1,2\cdots,M} = \frac{\partial\mathcal{F}_\rho}{\partial\mu_{A;m}} = 0$ needs to be obtained through the GRAPE method, as shown in FIG. 4. The same concept as the first solution is used, that is, starting from an initial guess waveform $\mu_A^{(0)}$, the update is performed through a linear iteration based on the gradient. In the $l^{\text{th}}$ iteration step, the iteration is performed according to the following equation:

$$\mu_{A;m}^{(l+1)} = \mu_{A;m}^{(l)} + \alpha_\rho k_{\rho,m}^{(l)} \quad (72).$$

In which, a learning rate $\alpha_\rho$ is an empirical constant.

In a case that a waveform converges to near an optimal value, $k_\rho^{(l)} \approx 0$, that is, $\mu_A^{(l+1)} \approx \mu_A^{(l)}$. Similarly, it is necessary to introduce data measured in an experiment for feedback. In the $l^{\text{th}}$ iteration, in a case that an actual output density matrix measured in the experiment is $\rho_{f;\exp}^{(l)}$, the gradient in the formula (67) may be changed to:

$$k_{\rho;m}^{(l)} = 2i\tau\left[\rho_{\text{ideal}}^{\dagger}\mathcal{Q}_{c;m}^{(l)}\rho_{f;\exp}^{(l)} - \rho_{\text{ideal}}^{\dagger}\mathcal{Q}_{d;m}^{(l)}\rho_{f;\exp}^{(l)}\right] \quad (73),$$

the gradient in the formula (73) is also mixed with experimental information, and therefore, the optimal value of the waveform can be found more effectively.

In addition, an initial control external field may be selected by the following methods. A control pulse of the CZ gate may be designed as a function with different waveforms. It is usually necessary to select a relatively smooth waveform to reduce a filtering effect existing in a circuit. For a waveform with a short rise time (such as a square wave), the filtering effect in the circuit is equivalent to performing a Fourier transform on a square wave on a spectrum. Because a high-order harmonic spectrum of the square wave is wide, a large range of the spectrum is affected. However, for a relatively smooth waveform, an affected spectrum is relatively narrow. Therefore, a smooth waveform is less affected by filtering. An example of a flattop waveform is provided, and a function of the flattop waveform is:

$$\mu(t) = \frac{\Gamma}{2}\left\{\text{erf}\left(\frac{4\sqrt{\ln 2}}{\sigma}[t - (t_0 + \sigma)]\right) - \text{erf}\left(\frac{4\sqrt{\ln 2}}{\sigma}[t - (t_0 + T - \sigma)]\right)\right\} \quad (74).$$

In which, erf(x) represents a Gaussian error function, defined as erf(x) = $\frac{2}{\sqrt{\pi}}\int_0^x e^{-\tau^2}d\tau$. A parameter $t_0 = 0$ represents a start time, $\Gamma$ and $T$ respectively represent an amplitude and a time length of a pulse of an initialized control

external field, $\sigma$ is related to curvature of an edge of the pulse, and t $\geq$ 0. Initially selected parameters of an experimental example are $\Gamma$ = - 492.5/2$\pi$ MHz, $T$ = 52 *ns*, and $\sigma$ = *3 ns.*

In addition, in some other embodiments, in consideration of some determined errors existing in a real quantum system, a more complex model is established. In the complex model, the actual error effects (such as the filtering effect) are taken into consideration in the Hamiltonian of the system, thereby calculating a more precise gradient.

In some other embodiments, the obtained gradient is corrected with reference to some boundary conditions given in an actual system, or applying some gradient correction algorithms (such as the gradient correction in the Adam algorithm commonly used in deep learning) to an iteration based on the GRAPE.

In some other embodiments, the GRAPE algorithm is combined with other algorithms. When the gradient cannot guide an effective update of the control external field, an optimized control external field functions as the initial control external field and is introduced into other algorithms, and some new parameters may be selected for optimization.

Next, experimental implementation of two optimization solutions in an SC qubit system is described.

(a) Experimental method of an optimization solution based on a gate operator

By using the foregoing optimization solution based on a gate operator, a CZ gate can be optimized experimentally. A specific implementation is as follows. As shown in FIG. 3, through the operations of {$I, X, +Y/2, \pm X/2$}, two bits are each prepared to 6 different initial states, and there is a total of 36 initial states. In the $l$th iteration step, a particular pulse $\mu_A^{(l)}(t)$ is applied to a target bit. A relatively smooth flattop waveform is selected as an initial waveform $\mu_A^{(0)}(t)$, and the amplitude thereof is near a resonance point $\mu_{A;r}$ a total time $T$ = 52 *ns* is slightly longer than a resonance period, and $\sigma$ = 3 *ns* is selected as the curvature of an edge. For each initial state, a final state after passing through the CZ gate is measured through QST. In a case that an input state is $\rho(0)$, an output state $\rho_f$ is expressed by the formula (2)

$$\rho_f^{(l)} = \sum_{m,n} \chi_{mn}^{(l)} \tilde{E}_m \rho(0) \tilde{E}_n^\dagger$$ . A process matrix $\chi^{(l)} = \{\chi_{mn}^{(l)}\}$ can be obtained by analyzing 36 input quantum states and corresponding output quantum states. For QST measurement results, it is necessary to read and correct quantum state preparation errors and measurement errors. To quantitatively express the precision of the CZ gate, $F(\chi^{(l)})$ = Tr{$(\chi^{(l)})^\dagger \chi_{ideal}$} is defined, where $\chi_{ideal}$ represents a process matrix corresponding to an ideal CZ gate. The precision of an initial flattop waveform is generally poor, and the control waveform needs to be optimized.

For such an optimization solution based on a gate operator, the gate operator $U_{exp}^{(l)}$ in an experiment needs to be used in an iteration process. However, experimentally, the process matrix $\chi^{(l)}$ is obtained through the QPT measurement. Therefore, it is necessary to find the corresponding $U_{exp}^{(l)}$. By using the Powell algorithm described above, $U_{exp}^{(l)}$ can be well estimated. Experimentally, trivial dynamic phases of two bits, $\phi_A$ and $\phi_B$ can be calibrated by using the Ramsey method and compensates for a quantum gate operation after $\mu_A^{(l)}(t)$. Therefore, $U_{exp}^{(l)}$ obtained by analyzing the QPT result automatically includes an auxiliary operator $(U_d^{(l)})^\dagger$ without coupling interaction. Because a real system includes a lot of extra noise, the CZ gate is not completely unitary. The precision still needs to be measured by using the process matrix $\chi^{(l)}$, but the best estimate, $U_{exp}^{(l)}$, in the iteration process generates important guiding for the increasing of the precision. To calculate a discretized gradient vector $\boldsymbol{k}_U^{(l)} = \{k_{U;1}^{(l)}, \cdots, k_{U;M}^{(l)}\}$, in consideration of a resolution limit of an arbitrary waveform generator (AWG) that controls a source of the waveform, a discrete time step is set as short as possible, for example 0.5 ns, and a learning rate is set based on an actual situation, which is empirically set to be $\alpha_U \approx 0.08$ GHz$^2$. The parameters $\{Q_{c;m}^{(l)}\}$ and $\{Q_{d;m}^{(l)}\}$ can be calculated according to the control waveform $\boldsymbol{\mu}_A^{(l)} = \{\mu_{A;1}^{(l)}, \cdots, \mu_{A;M}^{(l)}\}$ in the $l$th iteration. Finally, by using the gradient calculated by using the formula (37), a waveform $\boldsymbol{\mu}_A^{(l+1)}$ of a next step is calculated according to the formula (36). In an actual experiment, to better generate the waveform and alleviate impact of filtering in a circuit, the discretized waveform may be changed into a continuous waveform by re-interpolation and the continuous waveform is sent to the AWG for a next iteration.

(b) Experimental processes and results of an optimization solution based on a density matrix

For an optimization solution based on a density matrix, in a theoretical solution, for the sake of simplicity, only an initial state is selected. In fact, the selection of the initial state may be diverse. For example, two initial states, $\varphi(0) = (|0\rangle + |$

$1\rangle)\otimes(|0\rangle - |1\rangle)/2$ and $\varphi'(0) = (|0\rangle - |1\rangle)\otimes(|0\rangle + |1\rangle)/2$ can be considered, which can be obtained by applying revolving gates of {Y/2 , -Y/2} and {- Y/2, Y/2} to a base state respectively. The two initial states are selected to partially offset impact caused by experimental preparation and measurement errors. Similarly, it is started from the initial waveform $\mu_A^{(0)}(t)$ of the first solution. In the $l^{th}$ iteration step, an external field with a waveform $\mu_A^{(l)}(t)$ is applied, and output quantum states of the two selected initial states after passing through the external field are measured through the QST. For each output quantum state $\rho_{f;\exp}^{(l)}$, the gradient vector $k_\rho^{(l)} = \{k_{\rho;1}^{(l)}, \cdots, k_{\rho;M}^{(l)}\}$ is calculated by the waveform $\mu_A^{(l)} = \{\mu_{A;1}^{(l)}, \cdots, \mu_{A;M}^{(l)}\}$ and $\rho_{f;\exp}^{(l)}$ according to the formula (73). Because the two selected states are symmetric, two obtained gradients are averaged, and a next waveform $\mu_A^{(l+1)}$ is calculated by the formula (72). An exemplary value of the learning rate is $\alpha_\rho \approx$ 0.06 GHz$^2$. The waveform $\mu_A^{(l+1)}$ is similarly changed into a continuous waveform by interpolation and the continuous waveform is sent to the AWG.

Two different data-driven GRAPE optimization solutions for CZ gate optimization are provided according to the present disclosure. The two solutions are respectively based on a gate operator and a particular output density matrix, and an optimal control external field is obtained by minimizing two different objective functions. According to a feedback control mechanism, the key point of each solution is to calculate a gradient vector by utilizing mixed information of an input control external field and an experimental measurement value (an actual gate operator or an actual output density matrix). Based on the theory, a two-bit CZ gate is optimized by utilizing the SC quantum bit system according to the present disclosure. Compared with the related art, the GRAPE algorithm is relatively efficient in terms of an optimization speed, especially for a case that a parameter space is large.

Apparatus embodiments of the present disclosure are described hereinafter. An apparatus is used for performing the method of the present disclosure. For details not disclosed in the apparatus embodiments of the present disclosure, one may refer to the description of the method embodiments of the present disclosure.

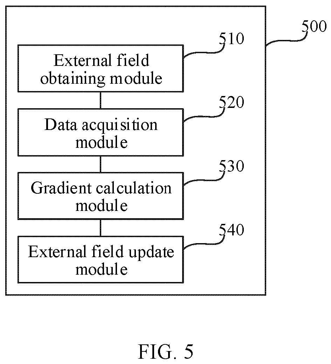

FIG. 5 shows a block diagram of an apparatus for optimizing a quantum gate according to an embodiment of the present disclosure. The apparatus has functions of implementing the foregoing method embodiments. The functions may be implemented by hardware, or may be implemented by hardware executing corresponding software. The apparatus may be the computer device described above, or may be arranged in the computer device. As shown in FIG. 5, an apparatus 500 may include: an external field obtaining module 510, a data acquisition module 520, a gradient calculation module 530, and an external field update module 540.

The external field obtaining module 510 is configured to obtain an initialized control external field corresponding to a quantum gate.

The data acquisition module 520 is configured to apply the control external field to a quantum bit of the quantum gate and acquire actual measurement data of the quantum gate. The actual measurement data is configured to reflect an actual characteristic of the quantum gate.

The gradient calculation module 530 is configured to calculate a gradient of the control external field based on the actual measurement data and ideal data.

The external field update module 540 is configured to update the control external field according to the gradient to obtain an updated control external field. The updated control external field is applied to the quantum bit of the quantum gate to optimize precision of the quantum gate.

In an exemplary embodiment, the gradient calculation module 530 is configured to:

derive a gradient calculation formula according to an objective function and a waveform function corresponding to the control external field, where the objective function is configured to characterize a difference between the actual measurement data and the ideal data, and the objective function is optimized to minimize a value of the objective function; and

calculate, by using the gradient calculation formula, the gradient of the control external field based on the actual measurement data and the ideal data.

In an exemplary embodiment, the actual measurement data includes an actual gate operator of the quantum gate. The data acquisition module 520 is configured to perform QPT on the quantum gate to obtain a process matrix corresponding to the quantum gate; and determine the actual gate operator corresponding to the quantum gate based on the process matrix corresponding to the quantum gate.

In an exemplary embodiment, the actual measurement data includes an actual output density matrix corresponding to the quantum gate. The data acquisition module 520 is configured to obtain at least one selected input quantum state; process the input quantum state through the quantum gate to obtain an output quantum state; and perform QST on the output quantum state to obtain an actual output density matrix corresponding to the quantum gate.

In an exemplary embodiment, the external field update module 540 is configured to calculate an updated value according to the gradient and a learning rate; and calculate the updated control external field according to a current control external field and the updated value.

In an exemplary embodiment, the data acquisition module 520 is configured to divide the control external field by time to obtain a pulse waveform sequence, the pulse waveform sequence including pulse waveforms corresponding to multiple time instants; and apply the pulse waveforms corresponding to the multiple time instants to the quantum bit of the quantum gate.

In an exemplary embodiment, the apparatus 500 further includes a condition determining module (which is not shown in FIG. 5). The condition determining module is configured to:

in a case that the quantum gate does not meet an optimization end condition, apply the control external field to the quantum bit of the quantum gate again by using the updated control external field as the current control external field, to update the control external field; and

end the optimization process in a case that the quantum gate meets the optimization end condition.

The optimization end condition includes at least one of the following: the actual characteristic of the quantum gate reflected by the actual measurement data reaches a set index, and a change of the control external field before and after the update is less than a set value.

In view of the above, the quantum gate optimization solution provided in the present disclosure is a closed-loop optimization solution driven and implemented by data feedback. In the present disclosure, an optimization algorithm based on gradient constraint is combined with actual measurement data. On the one hand, the control external field is optimized based on gradient constraint, an optimization time can be shortened and optimization costs can be reduced as compared with some optimization solution without gradient constraints. On the other hand, the actual measurement data of the quantum gate is acquired during the optimization process, and optimization is performed by using the actual measurement data as feedback, thereby ensuring the effect and precision of optimization. With reference to the foregoing two aspects, a quantum gate optimization solution that improves both the precision and efficiency is provided according to the present disclosure.

It should be noted that, the apparatus provided in the above embodiment is described based on functional modules for implementing specific functions, and the apparatus is not limited to be implemented as above. In the practical application, the functions may be assigned to and completed by different functional modules according to the requirements, that is, the device is divided into different functional modules, to implement all or some of the functions described above. In addition, the apparatus provided in the foregoing embodiments and method embodiments belong to the same concept. For the specific implementation process, one may refer to description of the method embodiments, and details are not described herein again.

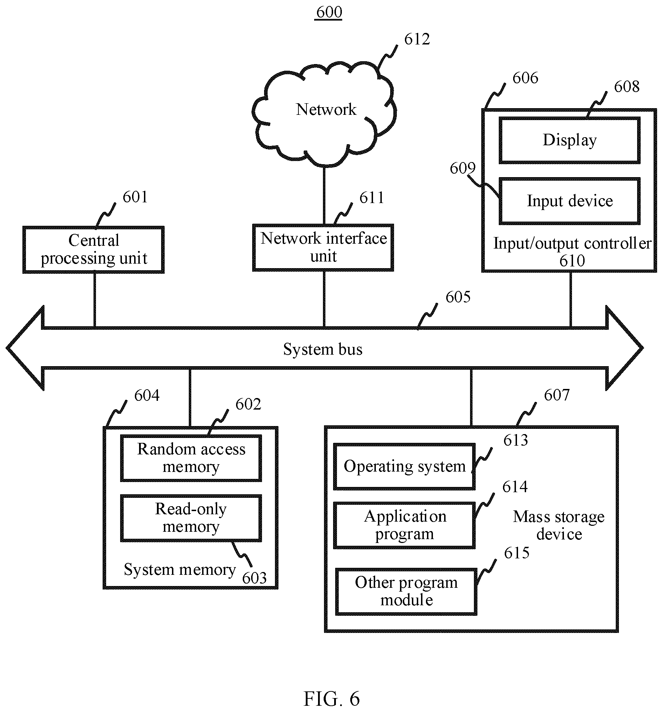

FIG. 6 is a structural block diagram of a computer device according to an embodiment of the present disclosure. The computer device may be configured to implement the method for optimizing a quantum gate provided in the foregoing embodiments. For example, the computer device is a classic computer.

A computer device 600 includes a processing unit (for example, a central processing unit (CPU), a graphics processing unit (GPU) and a field programmable gate array (FPGA), etc.) 601, a system memory 604 including a random-access memory (RAM) 602 and a read-only memory (ROM) 603, and a system bus 605 connecting the system memory 604 and the central processing unit 601. The computer device 600 further includes a basic input/output (I/O) system 606 assisting in transmitting information between components in a server, and a mass storage device 607 configured to store an operating system 613, an application program 614, and another program module 615.

The basic I/O system 606 includes a display 608 configured to display information and an input device 609, such as a mouse or a keyboard, for a user to input information. The display 608 and the input device 609 are both connected to the CPU 601 by using an input/output controller 610 connected to the system bus 605. The basic I/O system 606 may further include the I/O controller 610 to receive and process inputs from multiple other devices such as a keyboard, a mouse, or an electronic stylus. Similarly, the I/O controller 610 further provides an output to a display screen, a printer or another type of an output device.

The mass storage device 607 is connected to the CPU 601 by using a mass storage controller (which is not shown) connected to the system bus 605. The mass storage device 607 and an associated computer-readable medium provide non-volatile storage for the computer device 600. That is, the mass storage device 607 may include a computer-readable medium (which is not shown) such as a hard disk or a compact disc read-only memory (CD-ROM) drive.

Without loss of generality, the computer-readable medium may include a computer storage medium and a communication medium. The computer storage medium includes volatile and non-volatile media, and removable and non-removable media implemented by using any method or technology used for storing information such as computer-readable instructions, data structures, program modules, or other data. The computer storage medium includes an RAM, a ROM, an erasable programmable read-only memory (EPROM), an electrically erasable programmable read-only memory (EEPROM), a flash memory or another solid-state memory technology, a CD-ROM, a digital video disc (DVD) or another optical memory, a tape cartridge, a magnetic cassette, a magnetic disk memory, or another magnetic storage device. Certainly, a person skilled in the art may learn that types of the computer storage medium are not limited to the foregoing types. The system memory 604 and the mass storage device 607 may be collectively referred to as a memory.

According to the embodiments of the present disclosure, the computer device 600 may be further connected, through a network such as the Internet, to a remote computer on the network and run. That is, the computer device 600 may be connected to a network 612 by using a network interface unit 611 connected to the system bus 605, or may be connected to another type of network or a remote computer system (which is not shown) by using a network interface unit 611.

The memory further includes at least one instruction, at least one program, a code set, or an instruction set. The at least one instruction, the at least one program, the code set, or the instruction set is stored in the memory and is configured to be executed by one or more processors to implement the foregoing method for optimizing a quantum gate.

In an exemplary embodiment, a computer-readable storage medium is further provided, storing at least one instruction, at least one program, a code set, or an instruction set. The at least one instruction, the at least one program, the code set, or the instruction set, when executed by a processor, implements the method for optimizing a quantum gate.

In an embodiment, the computer-readable storage medium may include a read-only memory (ROM), a random-access memory (RAM), a solid state drive (SSD), an optical disc, or the like. The RAM may include a resistive random access memory (ReRAM) and a dynamic random access memory (DRAM).

In an exemplary embodiment, a computer program product or a computer program is provided. The computer program product or the computer program includes computer instructions, and the computer instructions are stored in a computer-readable storage medium. The processor of the computer device reads the computer instructions from the computer-readable storage medium, and executes the computer instructions, to cause the computer device to perform the foregoing method for optimizing a quantum gate.

The term of "plurality of" or "multiple" mentioned herein means two or more. The term of "and/or" describes an association relationship between associated objects and represents that three relationships may exist. For example, A and/or B may represent the following three cases: only A exists, both A and B exist, and only B exists. The character "/" herein generally indicates an "or" relationship between the associated objects. In addition, the step numbers described herein merely exemplarily show a possible execution sequence of the steps. In some other embodiments, the steps may not be performed according to the number sequence. For example, two steps with different numbers may be performed simultaneously, or two steps with different numbers may be performed according to a sequence contrary to the sequence shown in the figure. This is not limited in the embodiments of the present disclosure.

The foregoing descriptions are merely exemplary embodiments of the present disclosure, and are not intended to limit the present disclosure.

## Claims

1.  A method for optimizing a quantum gate, performed by a computer device, **characterized in that** the method comprising:

    obtaining (210) an initialized control external field corresponding to a quantum gate;
    applying (220) the control external field to a quantum bit of the quantum gate, and acquiring actual measurement data of the quantum gate, wherein the actual measurement data is configured to reflect an actual characteristic of the quantum gate;
    calculating (230) a gradient of the control external field based on the actual measurement data and ideal data, the ideal data being used for reflecting an ideal characteristic of the quantum gate;
    updating (240) the control external field according to the gradient to obtain an updated control external field; and
    applying (240) the updated control external field to the quantum bit of the quantum gate to optimize precision of the quantum gate,
    wherein the calculating a gradient of the control external field based on the actual measurement data and ideal data comprises:

        deriving a gradient calculation formula according to an objective function and a waveform function corresponding to the control external field, wherein the objective function is configured to characterize a difference between the actual measurement data and the ideal data, and the objective function is optimized to minimize a value of the objective function; and

calculating, by using the gradient calculation formula, the gradient of the control external field based on the actual measurement data and the ideal data, wherein the actual measurement data comprises an actual gate operator of the quantum gate, and the objective function used in the method is:

$$\mathcal{F}_U = 2 - \mathrm{Tr}\{U_c^\dagger U_d U_{\mathrm{CZ}}\} - \mathrm{Tr}\{U_{\mathrm{CZ}} U_d^\dagger U_c\}$$

the objective function being defined as:

$$\mathcal{F}_U = \left\| U_d^\dagger U_c - U_{\mathrm{CZ}} \right\|^2 = 2 - \mathrm{Tr}\{U_c^\dagger U_d U_{\mathrm{CZ}}\} - \mathrm{Tr}\{U_{\mathrm{CZ}} U_d^\dagger U_c\}$$

and the gradient calculation formula as used in the method is:

$$k_{U,m} \approx 2\tau \mathrm{ImTr}\left\{ Q_{c;m} (U_d^\dagger U_c)^\dagger U_{\mathrm{CZ}} \right\} + 2\tau \mathrm{ImTr}\{ Q_{d;m} (U_d^\dagger U_c) U_{\mathrm{CZ}} \}$$

the gradient calculation formula being defined as:

$$k_{U,m} = \frac{\partial \mathcal{F}_U}{\partial \mu_{A;m}}$$

$$= -\mathrm{Tr}\left\{ \frac{\partial U_c^\dagger}{\partial \mu_{A;m}} U_d U_{\mathrm{CZ}} + U_c^\dagger \frac{\partial U_d}{\partial \mu_{A;m}} U_{\mathrm{CZ}} + U_{\mathrm{CZ}} \frac{\partial U_d^\dagger}{\partial \mu_{A;m}} U_c + U_{\mathrm{CZ}} U_d^\dagger \frac{\partial U_c}{\partial \mu_{A;m}} \right\}$$

$$\approx -i\tau \mathrm{Tr}\{ Q_{c;m} U_c^\dagger U_d U_{\mathrm{CZ}} - U_{\mathrm{CZ}} U_d^\dagger U_c Q_{c;m} + U_{\mathrm{CZ}} Q_{d;m} U_d^\dagger U_c - U_c^\dagger U_d Q_{d;m} U_{\mathrm{CZ}} \}$$

$$= 2\tau \mathrm{ImTr}\left\{ Q_{c;m} (U_d^\dagger U_c)^\dagger U_{\mathrm{CZ}} \right\} + 2\tau \mathrm{ImTr}\{ Q_{d;m} (U_d^\dagger U_c) U_{\mathrm{CZ}} \}$$

where $U_c$ represents a total time evolution operator corresponding to the quantum gate, $U_d$ represents a time evolution operator corresponding to the quantum gate without inter-bit coupling, $U_{\mathrm{CZ}}$ represents an ideal gate operator corresponding to the quantum gate, $U_d^\dagger U_c$ is replaced by $U_{\mathrm{exp}}$ $U_{\mathrm{exp}}$ represents the actual gate operator corresponding to the quantum gate, $\tau = T/M$, time T being divided into M parts, $\mu_{A;m}$ represents an m-th pulse waveform in a pulse waveform sequence obtained by dividing the control external field $\mu_A$ by time, $Q_{c;m}$ represents a calculated value of a coupling term corresponding to the m-th pulse waveform, $Q_{d;m}$ represents a calculated value of a decoupling term corresponding to the m-th pulse waveform, and Im represents an imaginary component of a complex number.

2.  A method for optimizing a quantum gate, performed by a computer device, **characterized in that** the method comprising:

   obtaining (210) an initialized control external field corresponding to a quantum gate;
   applying (220) the control external field to a quantum bit of the quantum gate, and acquiring actual measurement data of the quantum gate, wherein the actual measurement data is configured to reflect an actual characteristic of the quantum gate;
   calculating (230) a gradient of the control external field based on the actual measurement data and ideal data, the ideal data being used for reflecting an ideal characteristic of the quantum gate;
   updating (240) the control external field according to the gradient to obtain an updated control external field; and
   applying (240) the updated control external field to the quantum bit of the quantum gate to optimize precision of the quantum gate,
   wherein the calculating a gradient of the control external field based on the actual measurement data and ideal data comprises:

      deriving a gradient calculation formula according to an objective function and a waveform function corresponding to the control external field, wherein the objective function is configured to characterize a difference between the actual measurement data and the ideal data, and the objective function is optimized to minimize a value of the objective function; and

calculating, by using the gradient calculation formula, the gradient of the control external field based on the actual measurement data and the ideal data, wherein the actual measurement data comprises an actual output density matrix corresponding to the quantum gate, and the objective function as used in the method is:

$$\mathcal{F}_\rho \approx 2 - 2\rho_{\text{ideal}}^\dagger \mathcal{U}_d^{-1} \mathcal{U}_c \rho(0)$$

the objective function being defined as:

$$\mathcal{F}_\rho = \|\rho_{\text{f}} - \rho_{\text{ideal}}\|^2 = \text{Tr}\{[\rho_{\text{f}} - \rho_{\text{ideal}}]^\dagger [\rho_{\text{f}} - \rho_{\text{ideal}}]\} \approx 2 - 2\text{Tr}\{\rho_{\text{ideal}}\rho_{\text{f}}\}$$

$$\approx 2 - 2\rho_{\text{ideal}}^\dagger \rho_{\text{f}} = 2 - 2\rho_{\text{ideal}}^\dagger \mathcal{U}_d^{-1} \mathcal{U}_c \rho(0)$$

and the gradient calculation formula as used in the method is:

$$k_{\rho;m} = 2i\tau[\rho_{\text{ideal}}^\dagger \mathcal{Q}_{c;m} \mathcal{U}_d^{-1} \mathcal{U}_c \rho(0) - \rho_{\text{ideal}}^\dagger \mathcal{Q}_{d;m} \mathcal{U}_d^{-1} \mathcal{U}_c \rho(0)]$$

the gradient calculation formula being defined as:

$$k_{\rho;m} = \frac{\partial \mathcal{F}_\rho}{\partial \mu_{A;m}} = -2\rho_{\text{ideal}}^\dagger \left[\frac{\partial \mathcal{U}_d^{-1}}{\partial \mu_{A;m}} \mathcal{U}_c + \mathcal{U}_d^{-1} \frac{\partial \mathcal{U}_c}{\partial \mu_{A;m}}\right] \rho(0)$$

$$= 2i\tau[\rho_{\text{ideal}}^\dagger \mathcal{Q}_{c;m} \mathcal{U}_d^{-1} \mathcal{U}_c \rho(0) - \rho_{\text{ideal}}^\dagger \mathcal{Q}_{d;m} \mathcal{U}_d^{-1} \mathcal{U}_c \rho(0)]$$

where $\rho_{\text{f}}$ represents an output density matrix corresponding to the quantum gate, $\rho_{\text{ideal}}$ represents an ideal output density matrix corresponding to the quantum gate, $\rho(0)$ represents an input density matrix corresponding to the quantum gate, $\mathcal{U}_c$ represents a time evolution super operator of a coupling term, $\mathcal{U}_d$ represents a time evolution super operator of a decoupling term, $\mathcal{U}_d^{-1} \mathcal{U}_c \rho(0)$ is replaced by $\rho_{f,\text{exp}}$, $\rho_{f,\text{exp}}$ represents an actual output density matrix corresponding to the quantum gate, $\tau = T/M$, time T being divided into M parts, $\mu_{A;m}$ represents an m-th pulse waveform in a pulse waveform sequence obtained by dividing the control external field $\mu_A$ by time, $Q_{c;m}$ represents a calculated value of a coupling term corresponding to the m-th pulse waveform, $Q_{d;m}$ represents a calculated value of a decoupling term corresponding to the m-th pulse waveform, and i represents an imaginary unit.

3. The method according to claim 1,
   wherein the acquiring actual measurement data of the quantum gate comprises:

   performing quantum process tomography on the quantum gate to obtain a process matrix corresponding to the quantum gate; and
   determining the actual gate operator corresponding to the quantum gate based on the process matrix corresponding to the quantum gate.

4. The method according to claim 2,
   wherein the acquiring actual measurement data of the quantum gate comprises:

   obtaining at least one selected input quantum state;
   processing the input quantum state through the quantum gate to obtain an output quantum state; and
   performing quantum state tomography QST on the output quantum state to obtain the actual output density matrix corresponding to the quantum gate.

5. The method according to claim 1 or 2, wherein the updating the control external field according to the gradient to obtain an updated control external field comprises:

calculating an updated value according to the gradient and a learning rate; and
calculating the updated control external field according to a current control external field and the updated value.

6. The method according to claim 1 or 2, wherein the applying the control external field to a quantum bit of the quantum gate comprises:

dividing the control external field by time to obtain a pulse waveform sequence, wherein the pulse waveform sequence comprises pulse waveforms corresponding to a plurality of time instants; and
applying the pulse waveforms corresponding to the plurality of time instants to the quantum bit of the quantum gate.

7. The method according to claim 1 or 2, wherein after the updating the control external field according to the gradient to obtain an updated control external field, the method further comprises:

in a case that the quantum gate does not meet an optimization end condition, applying the control external field to a quantum bit of the quantum gate again by taking the updated control external field as the current control external field, to update the control external field; and
ending the optimization process in a case that the quantum gate meets the optimization end condition, wherein the optimization end condition comprises at least one of: the actual characteristic of the quantum gate reflected by the actual measurement data reaches a set index, and a change of the control external field before and after the update is less than a set value.

8. The method according to any one of claims 1 to 7, wherein a waveform function corresponding to the initialized control external field is:

$$\mu(t) = \frac{\Gamma}{2}\left\{\mathrm{erf}\left(\frac{4\sqrt{\ln 2}}{\sigma}\left[t - (t_0 + \sigma)\right]\right) - \mathrm{erf}\left(\frac{4\sqrt{\ln 2}}{\sigma}\left[t - (t_0 + T - \sigma)\right]\right)\right\},$$

where erf(x) represents a Gaussian error function defined as $\mathrm{erf}(x) = \frac{2}{\sqrt{\pi}}\int_0^x e^{-\tau^2} d\tau$, a parameter $t_0 = 0$ represents a start time, $\Gamma$ and T respectively represent an amplitude and a time length of a pulse of the initialized control external field, $\sigma$ is related to curvature of an edge of the pulse, and $t \geq 0$.

9. An apparatus for optimizing a quantum gate, comprising:

a memory (602, 603, 604) storing programs; and
a processor (601), wherein the processor (601) is configured to execute the programs stored in the memory (602, 603, 604) to perform the method according to any one of claims 1 to 8.

10. . A computer program product or a computer program, wherein the computer program product or the computer program comprises computer instructions, the computer instructions are stored in a computer-readable storage medium, a processor (601) reads the computer instructions from the computer-readable storage medium and executes the computer instructions to implement the method for optimizing a quantum gate according to any one of claims 1 to 8.

11. A computer-readable storage medium storing the computer program product or the computer program of claim 10.

**Patentansprüche**

1. Verfahren zum Optimieren eines Quantengatters, das von einer Computervorrichtung ausgeführt wird, **dadurch gekennzeichnet, dass** das Verfahren umfasst:

Erhalten (210) eines initialisierten externen Steuerfeldes, das einem Quantengatter entspricht;
Anwenden (220) des externen Steuerfeldes auf ein Quantenbit des Quantengatters und Erfassen tatsächlicher Messdaten des Quantengatters, wobei die tatsächlichen Messdaten so konfiguriert sind, dass sie eine tatsächliche Eigenschaft des Quantengatters widerspiegeln;
Berechnen (230) eines Gradienten des externen Steuerfeldes auf der Grundlage der tatsächlichen Messdaten und der idealen Daten, wobei die idealen Daten zur Wiedergabe einer idealen Eigenschaft des Quantengatters verwendet werden;

Aktualisieren (240) des externen Steuerfeldes gemäß dem Gradienten, um ein aktualisiertes externes Steuerfeld zu erhalten; und

Anwenden (240) des aktualisierten externen Steuerfeldes auf das Quantenbit des Quantengatters, um die Präzision des Quantengatters zu optimieren,

wobei das Berechnen eines Gradienten des externen Steuerfeldes basierend auf den tatsächlichen Messdaten und den idealen Daten umfasst:

Ableiten einer Gradientenberechnungsformel gemäß einer Zielfunktion und einer Wellenformfunktion, die dem externen Steuerfeld entspricht, wobei die Zielfunktion so konfiguriert ist, dass sie eine Differenz zwischen den tatsächlichen Messdaten und den idealen Daten charakterisiert, und die Zielfunktion so optimiert ist, dass sie einen Wert der Zielfunktion minimiert; und

Berechnen des Gradienten des externen Steuerfeldes unter Verwendung der Gradientenberechnungsformel auf der Grundlage der tatsächlichen Messdaten und der idealen Daten,

wobei die tatsächlichen Messdaten einen tatsächlichen Gatteroperator des Quantengatters umfassen und die in dem Verfahren verwendete Zielfunktion:

$$\mathcal{F}_U = 2 - \mathrm{Tr}\{U_c^\dagger U_d U_{\mathrm{CZ}}\} - \mathrm{Tr}\{U_{\mathrm{CZ}} U_d^\dagger U_c\}$$

ist, wobei die Zielfunktion definiert ist als:

$$\mathcal{F}_U = \left\|U_d^\dagger U_c - U_{\mathrm{CZ}}\right\|^2 = 2 - \mathrm{Tr}\{U_c^\dagger U_d U_{\mathrm{CZ}}\} - \mathrm{Tr}\{U_{\mathrm{CZ}} U_d^\dagger U_c\}$$

und die in dem Verfahren verwendete Gradientenberechnungsformel:

$$k_{U,m} \approx 2\tau \mathrm{Im}\mathrm{Tr}\left\{Q_{c;m}\left(U_d^\dagger U_c\right)^\dagger U_{\mathrm{CZ}}\right\} + 2\tau \mathrm{Im}\mathrm{Tr}\{Q_{d;m}(U_d^\dagger U_c)U_{\mathrm{CZ}}\}$$

wobei die Gradientenberechnungsformel definiert ist als:

$$k_{U,m} = \frac{\partial \mathcal{F}_U}{\partial \mu_{A;m}}$$

$$= -\mathrm{Tr}\left\{\frac{\partial U_c^\dagger}{\partial \mu_{A;m}} U_d U_{\mathrm{CZ}} + U_c^\dagger \frac{\partial U_d}{\partial \mu_{A;m}} U_{\mathrm{CZ}} + U_{\mathrm{CZ}} \frac{\partial U_d^\dagger}{\partial \mu_{A;m}} U_c + U_{\mathrm{CZ}} U_d^\dagger \frac{\partial U_c}{\partial \mu_{A;m}}\right\}$$

$$\approx -i\tau \mathrm{Tr}\{Q_{c;m} U_c^\dagger U_d U_{\mathrm{CZ}} - U_{\mathrm{CZ}} U_d^\dagger U_c Q_{c;m} + U_{\mathrm{CZ}} Q_{d;m} U_d^\dagger U_c - U_c^\dagger U_d Q_{d;m} U_{\mathrm{CZ}}\}$$

$$= 2\tau \mathrm{Im}\mathrm{Tr}\left\{Q_{c;m}\left(U_d^\dagger U_c\right)^\dagger U_{\mathrm{CZ}}\right\} + 2\tau \mathrm{Im}\mathrm{Tr}\{Q_{d;m}(U_d^\dagger U_c)U_{\mathrm{CZ}}\}$$

wobei $U_c$ einen Gesamtzeitentwicklungsoperator entsprechend dem Quantengatter darstellt, $U_d$ einen Zeitentwicklungsoperator entsprechend dem Quantengatter ohne Inter-Bit-Kopplung darstellt, $U_{\mathrm{CZ}}$ einen idealen Gatteroperator entsprechend dem Quantengatter darstellt, $U_d^\dagger U_c$ durch $U_{\mathrm{exp}}$ ersetzt wird, $U_{\mathrm{exp}}$ den tatsächlichen Gatteroperator entsprechend dem Quantengatter darstellt, $\tau = T/M$, wobei die Zeit T in M Teile unterteilt ist, $\mu_{A;m}$ eine m-te Pulswellenform in einer Pulswellenformsequenz, die durch Teilen des externen Steuerfeldes $\mu_A$ durch die Zeit erhalten wird, $Q_{c;m}$ einen berechneten Wert eines Kopplungsterms entsprechend der m-ten Pulswellenform, $Q_{d;m}$ einen berechneten Wert eines Entkopplungsterms entsprechend der m-ten Pulswellenform und Im eine imaginäre Komponente einer komplexen Zahl darstellt.

2. Verfahren zum Optimieren eines Quantengatters, das von einer Computervorrichtung ausgeführt wird, **dadurch**

**gekennzeichnet, dass** das Verfahren umfasst:

Erhalten (210) eines initialisierten externen Steuerfeldes, das einem Quantengatter entspricht;

Anwenden (220) des externen Steuerfeldes auf ein Quantenbit des Quantengatters und Erfassen tatsächlicher Messdaten des Quantengatters, wobei die tatsächlichen Messdaten so konfiguriert sind, dass sie eine tatsächliche Eigenschaft des Quantengatters widerspiegeln;

Berechnen (230) eines Gradienten des externen Steuerfeldes auf der Grundlage der tatsächlichen Messdaten und der idealen Daten, wobei die idealen Daten zur Wiedergabe einer idealen Eigenschaft des Quantengatters verwendet werden;

Aktualisieren (240) des externen Steuerfeldes gemäß dem Gradienten, um ein aktualisiertes externes Steuerfeld zu erhalten; und

Anwenden (240) des aktualisierten externen Steuerfeldes auf das Quantenbit des Quantengatters, um die Präzision des Quantengatters zu optimieren,

wobei das Berechnen eines Gradienten des externen Steuerfeldes basierend auf den tatsächlichen Messdaten und den idealen Daten umfasst:

Ableiten einer Gradientenberechnungsformel gemäß einer Zielfunktion und einer Wellenformfunktion entsprechend dem externen Steuerfeld, wobei die Zielfunktion konfiguriert ist, um eine Differenz zwischen den tatsächlichen Messdaten und den idealen Daten zu charakterisieren, und die Zielfunktion optimiert ist, um einen Wert der Zielfunktion zu minimieren; und

Berechnen des Gradienten des externen Steuerfeldes unter Verwendung der Gradientenberechnungsformel auf der Grundlage der tatsächlichen Messdaten und der idealen Daten, wobei die tatsächlichen Messdaten eine tatsächliche Ausgangs-Dichtematrix entsprechend dem Quantengatter umfassen und die Zielfunktion, wie sie in dem Verfahren verwendet wird, ist:

$$\mathcal{F}_\rho \approx 2 - 2\rho_{\text{ideal}}^\dagger \mathcal{U}_d^{-1} \mathcal{U}_c \rho(0)$$

wobei die Zielfunktion definiert ist als:

$$\mathcal{F}_\rho = \|\rho_{\text{f}} - \rho_{\text{ideal}}\|^2 = \text{Tr}\{[\rho_{\text{f}} - \rho_{\text{ideal}}]^\dagger [\rho_{\text{f}} - \rho_{\text{ideal}}]\} \approx 2 - 2\text{Tr}\{\rho_{\text{ideal}}\rho_{\text{f}}\}$$

$$\approx 2 - 2\rho_{\text{ideal}}^\dagger \rho_{\text{f}} = 2 - 2\rho_{\text{ideal}}^\dagger \mathcal{U}_d^{-1} \mathcal{U}_c \rho(0)$$

und die Gradientenberechnungsformel, wie sie in dem Verfahren verwendet wird, ist:

$$k_{\rho;m} = 2i\tau\left[\rho_{\text{ideal}}^\dagger \mathcal{Q}_{c;m} \mathcal{U}_d^{-1} \mathcal{U}_c \rho(0) - \rho_{\text{ideal}}^\dagger \mathcal{Q}_{d;m} \mathcal{U}_d^{-1} \mathcal{U}_c \rho(0)\right]$$

wobei die Gradientenberechnungsformel definiert ist als:

$$k_{\rho;m} = \frac{\partial \mathcal{F}_\rho}{\partial \mu_{A;m}} = -2\rho_{\text{ideal}}^\dagger \left[\frac{\partial \mathcal{U}_d^{-1}}{\partial \mu_{A;m}} \mathcal{U}_c + \mathcal{U}_d^{-1} \frac{\partial \mathcal{U}_c}{\partial \mu_{A;m}}\right]\rho(0)$$

$$= 2i\tau\left[\rho_{\text{ideal}}^\dagger \mathcal{Q}_{c;m} \mathcal{U}_d^{-1} \mathcal{U}_c \rho(0) - \rho_{\text{ideal}}^\dagger \mathcal{Q}_{d;m} \mathcal{U}_d^{-1} \mathcal{U}_c \rho(0)\right]$$

wobei $\rho_{\text{f}}$ eine Ausgangs-Dichtematrix darstellt, die dem Quantengatter entspricht, $\rho_{\text{ideal}}$ eine ideale Ausgangs-Dichtematrix darstellt, $\rho(0)$ die dem Quantengatter entspricht, eine Eingangs-Dichtematrix darstellt, die dem Quantengatter entspricht, $\mathcal{U}_c$ einen Zeitentwicklungs-Superoperator eines Kopplungsterms darstellt, $\mathcal{U}_d$ einen Zeitentwicklungs-Superoperator eines Entkopplungsterms darstellt, $\mathcal{U}_d^{-1} \mathcal{U}_c \rho(0)$ durch $\rho_{f,\text{exp}}$ ersetzt wird, $\rho_{f,\text{exp}}$ eine tatsächliche Ausgangs-Dichtematrix darstellt, die dem Quantengatter entspricht, $\tau = T/M$, wobei die Zeit T in M Teile unterteilt ist, $\mu_{A;m}$ eine m-th Pulswellenform in einer Pulswellenformsequenz darstellt, die durch Teilen des externen Steuerfeldes $\mu_A$ durch die Zeit erhalten wird, $Q_{c;m}$ einen berechneten Wert eines Kopplungsterms darstellt, der der m-th Pulswellenform entspricht, $Q_{d;m}$ einen berechneten Wert eines Entkopplungsterms darstellt, der der m-th Pulswellenform entspricht, und i eine imaginäre Einheit darstellt.

3. Verfahren nach Anspruch 1, wobei das Erfassen der tatsächlichen Messdaten des Quantengatters umfasst:

Durchführen einer Quantenprozesstomographie an dem Quantengatter, um eine dem Quantengatter entsprechende Prozessmatrix zu erhalten; und
Bestimmen des dem Quantengatter entsprechenden tatsächlichen Gatteroperators auf der Grundlage der dem Quantengatter entsprechenden Prozessmatrix.

4. Verfahren nach Anspruch 2, wobei das Erfassen der tatsächlichen Messdaten des Quantengatters umfasst:

Erhalten mindestens eines ausgewählten Eingangs-Quantenzustands;
Verarbeiten des Eingangs-Quantenzustands durch das Quantengatter, um einen Ausgangs-Quantenzustand zu erhalten; und
Durchführen einer Quantenzustands-Tomographie QST an dem Ausgangs-Quantenzustand, um die tatsächliche Ausgangs-Dichtematrix zu erhalten, die dem Quantengatter entspricht.

5. Verfahren nach Anspruch 1 oder 2, wobei das Aktualisieren des externen Steuerfeldes gemäß dem Gradienten, um ein aktualisiertes externes Steuerfeld zu erhalten, umfasst:

Berechnen eines aktualisierten Wertes gemäß dem Gradienten und einer Lernrate; und
Berechnen des aktualisierten externen Steuerfeldes gemäß einem aktuellen externen Steuerfeld und dem aktualisierten Wert.

6. Verfahren nach Anspruch 1 oder 2, wobei das Anwenden des externen Steuerfeldes auf ein Quantenbit des Quantengatters umfasst:

Teilen des externen Steuerfeldes durch die Zeit, um eine Pulswellenformsequenz zu erhalten, wobei die Pulswellenformsequenz Pulswellenformen umfasst, die einer Vielzahl von Zeitpunkten entsprechen; und
Anwenden der Pulswellenformen, die der Vielzahl von Zeitpunkten entsprechen, auf das Quantenbit des Quantengatters.

7. Verfahren nach Anspruch 1 oder 2, wobei das Verfahren nach der Aktualisierung des externen Steuerfeldes gemäß dem Gradienten zum Erhalt eines aktualisierten externen Steuerfeldes ferner umfasst:

in einem Fall, in dem das Quantengatter eine Optimierungsendbedingung nicht erfüllt, erneutes Anwenden des externen Steuerfeldes auf ein Quantenbit des Quantengatters durch Verwendung des aktualisierten externen Steuerfeldes als das aktuelle externe Steuerfeld, um das externe Steuerfeld zu aktualisieren; und
Beendigung des Optimierungsprozesses in einem Fall, in dem das Quantengatter die Optimierungsendbedingung erfüllt,
wobei die Optimierungsendbedingung mindestens eines der folgenden Merkmale umfasst: die tatsächliche Charakteristik des Quantengatters, die durch die tatsächlichen Messdaten wiedergegeben wird, erreicht einen festgelegten Index, und eine Änderung des externen Steuerfeldes vor und nach der Aktualisierung ist kleiner als ein festgelegter Wert.

8. Verfahren nach einem der Ansprüche 1 bis 7, wobei eine Wellenformfunktion, die dem initialisierten externen Steuerfeld entspricht,

$$\mu(t) = \frac{\Gamma}{2}\left\{\mathrm{erf}\left(\frac{4\sqrt{\ln 2}}{\sigma}\left[t - (t_0 + \sigma)\right]\right) - \mathrm{erf}\left(\frac{4\sqrt{\ln 2}}{\sigma}\left[t - (t_0 + T - \sigma)\right]\right)\right\},$$

wobei erf(x) eine Gauss'sche Fehlerfunktion darstellt, die als $\mathrm{erf}(x) = \frac{2}{\sqrt{\pi}}\int_0^x e^{-\tau^2}d\tau$ definiert ist, ein Parameter $t_0 = 0$ eine Startzeit darstellt, $\Gamma$ and T jeweils eine Amplitude und eine Zeitlänge eines Impulses des initialisierten externen Steuerfeldes darstellen, $\sigma$ mit der Krümmung einer Kante des Impulses in Beziehung steht und $t \geq 0$ ist.

9. Vorrichtung zum Optimieren eines Quantengatters, aufweisend:

einen Speicher (602, 603, 604), der Programme speichert; und

einen Prozessor (601), wobei der Prozessor (601) ausgebildet ist, die in dem Speicher (602, 603, 604) gespeicherten Programme auszuführen, um das Verfahren gemäß einem beliebigen der Ansprüche 1 bis 8 auszuführen.

10. Computerprogrammprodukt oder Computerprogramm, wobei das Computerprogrammprodukt oder das Computerprogramm Computerbefehle aufweist, die Computerbefehle in einem computerlesbaren Speichermedium gespeichert sind, ein Prozessor (601) die Computerbefehle aus dem computerlesbaren Speichermedium liest und die Computerbefehle ausführt, um das Verfahren zum Optimieren eines Quantengatters gemäß einem beliebigen der Ansprüche 1 bis 8 auszuführen.

11. Computerlesbares Speichermedium, das das Computerprogrammprodukt oder das Computerprogramm von Anspruch 10 speichert.

**Revendications**

1. Procédé d'optimisation d'une porte quantique, mis en œuvre par un dispositif informatique, **caractérisé par le fait que** le procédé comprend:

obtenir (210) un champ externe de commande initialisé correspondant à une porte quantique;

appliquer (220) le champ externe de commande à un bit quantique de la porte quantique, et acquérir des données de mesure réelles de la porte quantique, les données de mesure réelles étant configurées pour refléter une caractéristique réelle de la porte quantique;

calculer (230) un gradient du champ externe de commande sur la base des données de mesure réelles et des données idéales, les données idéales étant utilisées pour refléter une caractéristique idéale de la porte quantique;

mettre à jour (240) le champ externe de commande en fonction du gradient pour obtenir un champ externe de commande mis à jour; et

appliquer (240) le champ externe de commande mis à jour au bit quantique de la porte quantique pour optimiser la précision de la porte quantique,

dans lequel le calcul d'un gradient du champ externe de commande sur la base des données de mesure réelles et des données idéales comprend:

dériver une formule de calcul de gradient selon une fonction objectif et une fonction de forme d'onde correspondant au champ externe de commande, dans lequel la fonction objectif est configurée pour caractériser une différence entre les données de mesure réelles et les données idéales, et la fonction objectif est optimisée pour minimiser une valeur de la fonction objectif; et

calculer, en utilisant la formule de calcul de gradient, le gradient du champ externe de commande sur la base des données de mesure réelles et des données idéales, les donn ées de mesure réelles comprenant un opérateur de porte réel de la porte quantique, et la fonction objectif utilisée dans le procédé est:

$$\mathcal{F}_U = 2 - \mathrm{Tr}\{U_c^\dagger U_d U_{\mathrm{CZ}}\} - \mathrm{Tr}\{U_{\mathrm{CZ}} U_d^\dagger U_c\}$$

la fonction objectif étant définie comme:

$$\mathcal{F}_U = \left\| U_d^\dagger U_c - U_{\mathrm{CZ}} \right\|^2 = 2 - \mathrm{Tr}\{U_c^\dagger U_d U_{\mathrm{CZ}}\} - \mathrm{Tr}\{U_{\mathrm{CZ}} U_d^\dagger U_c\}$$

et la formule de calcul de gradient telle qu'utilisée dans le procédé est:

$$k_{U,m} \approx 2\tau \mathrm{ImTr}\left\{ Q_{c;m} \left(U_d^\dagger U_c\right)^\dagger U_{\mathrm{CZ}} \right\} + 2\tau \mathrm{ImTr}\{ Q_{d;m} (U_d^\dagger U_c) U_{\mathrm{CZ}} \}$$

la formule de calcul de gradient étant définie comme:

$$k_{U,m} = \frac{\partial \mathcal{F}_U}{\partial \mu_{A;m}}$$

$$= -\mathrm{Tr}\left\{\frac{\partial U_c^\dagger}{\partial \mu_{A;m}} U_d U_{\mathrm{CZ}} + U_c^\dagger \frac{\partial U_d}{\partial \mu_{A;m}} U_{\mathrm{CZ}} + U_{\mathrm{CZ}} \frac{\partial U_d^\dagger}{\partial \mu_{A;m}} U_c + U_{\mathrm{CZ}} U_d^\dagger \frac{\partial U_c}{\partial \mu_{A;m}}\right\}$$

$$\approx -i\tau \mathrm{Tr}\{Q_{c;m} U_c^\dagger U_d U_{\mathrm{CZ}} - U_{\mathrm{CZ}} U_d^\dagger U_c Q_{c;m} + U_{\mathrm{CZ}} Q_{d;m} U_d^\dagger U_c - U_c^\dagger U_d Q_{d;m} U_{\mathrm{CZ}}\}$$

$$= 2\tau \mathrm{ImTr}\left\{Q_{c;m}\left(U_d^\dagger U_c\right)^\dagger U_{\mathrm{CZ}}\right\} + 2\tau \mathrm{ImTr}\{Q_{d;m}\left(U_d^\dagger U_c\right)U_{\mathrm{CZ}}\}$$

dans laquelle $U_c$ représente un opérateur d'évolution temporelle totale correspondant à la porte quantique, $U_d$ représente un opérateur d'évolution temporelle correspondant à la porte quantique sans couplage inter-bits, $U_{\mathrm{CZ}}$ représente un opérateur de porte idéal correspondant à la porte quantique, $U_d^\dagger U_c$ est remplacé par $U_{\mathrm{exp}}$, $U_{\mathrm{exp}}$ représente l'opérateur de porte réel correspondant à la porte quantique, $\tau = T/M$, le temps T étant divisé en M parties, $\mu_{A;m}$ représente une m-ième forme d'onde d'impulsion dans une séquence de formes d'onde d'impulsion obtenue en divisant le champ externe de commande $\mu_A$ par le temps, $Q_{c;m}$ représente une valeur calculée d'un terme de couplage correspondant à la m-ième forme d'onde d'impulsion, $Q_{d;m}$ représente une valeur calculée d'un terme de découplage correspondant à la m-ième forme d'onde d'impulsion, et Im représente une composante imaginaire d'un nombre complexe.

2. Procédé d'optimisation d'une porte quantique, mis en œuvre par un dispositif informatique, **caractérisé par le fait que** le procédé comprend:

obtenir (210) un champ externe de commande initialisé correspondant à une porte quantique;
appliquer (220) le champ externe de commande à un bit quantique de la porte quantique, et acquérir des données de mesure réelles de la porte quantique, les données de mesure réelles étant configurées pour refléter une caractéristique réelle de la porte quantique;
calculer (230) un gradient du champ externe de commande sur la base des données de mesure réelles et des données idéales, les données idéales étant utilisées pour refléter une caractéristique idéale de la porte quantique;
mettre à jour (240) le champ externe de commande en fonction du gradient pour obtenir un champ externe de commande mis à jour; et
appliquer (240) le champ externe de commande mis à jour au bit quantique de la porte quantique pour optimiser la précision de la porte quantique,
dans lequel le calcul d'un gradient du champ externe de commande sur la base des données de mesure réelles et des données idéales comprend:

dériver une formule de calcul de gradient selon une fonction objectif et une fonction de forme d'onde correspondant au champ externe de commande, dans lequel la fonction objectif est configurée pour caractériser une différence entre les données de mesure réelles et les données idéales, et la fonction objectif est optimisée pour minimiser une valeur de la fonction objectif; et
calculer, en utilisant la formule de calcul de gradient, le gradient du champ externe de commande sur la base des données de mesure réelles et des données idéales, les données de mesure réelles comprenant une matrice de densité de sortie réelle correspondant à la porte quantique, et la fonction objectif telle qu'utilisée dans le procédé est :

$$\mathcal{F}_\rho \approx 2 - 2\rho_{\mathrm{ideal}}^\dagger \mathcal{U}_d^{-1} \mathcal{U}_c \rho(0)$$

la fonction objectif étant définie comme:

$$\mathcal{F}_\rho = \|\rho_{\mathrm{f}} - \rho_{\mathrm{ideal}}\|^2 = \mathrm{Tr}\{[\rho_{\mathrm{f}} - \rho_{\mathrm{ideal}}]^\dagger [\rho_{\mathrm{f}} - \rho_{\mathrm{ideal}}]\} \approx 2 - 2\mathrm{Tr}\{\rho_{\mathrm{ideal}}\rho_{\mathrm{f}}\}$$

$$\approx 2 - 2\rho_{\mathrm{ideal}}^\dagger \rho_{\mathrm{f}} = 2 - 2\rho_{\mathrm{ideal}}^\dagger \mathcal{U}_d^{-1} \mathcal{U}_c \rho(0)$$

et la formule de calcul de gradient telle qu'utilisée dans le procédé est:

$$k_{\rho;m} = 2i\tau\left[\rho_{\text{ideal}}^{\dagger}\mathcal{Q}_{c;m}\mathcal{U}_d^{-1}\mathcal{U}_c\rho(0) - \rho_{\text{ideal}}^{\dagger}\mathcal{Q}_{d;m}\mathcal{U}_d^{-1}\mathcal{U}_c\rho(0)\right]$$

la formule de calcul de gradient étant définie comme:

$$k_{\rho;m} = \frac{\partial\mathcal{F}_\rho}{\partial\mu_{A;m}} = -2\rho_{\text{ideal}}^{\dagger}\left[\frac{\partial\mathcal{U}_d^{-1}}{\partial\mu_{A;m}}\mathcal{U}_c + \mathcal{U}_d^{-1}\frac{\partial\mathcal{U}_c}{\partial\mu_{A;m}}\right]\rho(0)$$

$$= 2i\tau\left[\rho_{\text{ideal}}^{\dagger}\mathcal{Q}_{c;m}\mathcal{U}_d^{-1}\mathcal{U}_c\rho(0) - \rho_{\text{ideal}}^{\dagger}\mathcal{Q}_{d;m}\mathcal{U}_d^{-1}\mathcal{U}_c\rho(0)\right]$$

dans laquelle $\rho_f$ représente une matrice de densité de sortie correspondant à la porte quantique, $\rho_{\text{ideal}}$ représente une matrice de densité de sortie idéale correspondant à la porte quantique, $\rho(0)$ représente une matrice de densité d'entrée correspondant à la porte quantique, $\mathcal{U}_c$ représente un super-opérateur d'évolution temporelle d'un terme de couplage, $\mathcal{U}_d$ représente un super-opérateur d'évolution temporelle d'un terme de découplage, $\mathcal{U}_d^{-1}\mathcal{U}_c\rho(0)$ est remplacé par $\rho_{f,\text{exp}}$, $\rho_{f,\text{exp}}$ représente une matrice de densité de sortie réelle correspondant à la porte quantique, $\tau = T/M$, le temps T étant divisé en M parties, $\mu_{A;m}$ représente une m-ième forme d'onde d'impulsion dans une séquence de formes d'onde d'impulsion obtenue en divisant le champ externe de commande $\mu_A$ par le temps, $Q_{c;m}$ représente une valeur calculée d'un terme de couplage correspondant à la m-ième forme d'onde d'impulsion, $Q_{d;m}$ représente une valeur calculée d'un terme de découplage correspondant à la m-ième forme d'onde d'impulsion, et i représente une unité imaginaire.

3. Procédé selon la revendication 1,
dans lequel l'acquisition des données de mesure réelles de la porte quantique comprend:

la mise en œuvre d'une tomographie de processus quantique sur la porte quantique pour obtenir une matrice de processus correspondant à la porte quantique; et
la détermination de l'opérateur de porte réel correspondant à la porte quantique sur la base de la matrice de processus correspondant à la porte quantique.

4. Procédé selon la revendication 2,
dans lequel l'acquisition des données de mesure réelles de la porte quantique comprend:

l'obtention d'au moins un état quantique d'entrée sélectionné;
le traitement de l'état quantique d'entrée par l'intermédiaire de la porte quantique pour obtenir un état quantique de sortie; et
la mise en œuvre d'une tomographie d'état quantique QST sur l'état quantique de sortie pour obtenir la matrice de densité de sortie réelle correspondant à la porte quantique.

5. Procédé selon la revendication 1 ou 2, dans lequel la mise à jour du champ externe de commande en fonction du gradient pour obtenir un champ externe de commande mis à jour comprend:

le calcul d'une valeur mise à jour en fonction du gradient et d'un taux d'apprentissage; et
le calcul du champ externe de commande mis à jour en fonction d'un champ externe de commande actuel et de la valeur mise à jour.

6. Procédé selon la revendication 1 ou 2, dans lequel l'application du champ externe de commande à un bit quantique de la porte quantique comprend:

la division du champ externe de commande par le temps pour obtenir une séquence de formes d'onde d'impulsion, la séquence de formes d'onde d'impulsion comprenant des formes d'onde d'impulsion correspondant à une pluralité d'instants temporels; et
l'application des formes d'onde d'impulsion correspondant à la pluralité d'instants temporels au bit quantique de la porte quantique.

7. Procédé selon la revendication 1 ou 2, dans lequel, après la mise à jour du champ externe de commande en fonction du gradient pour obtenir un champ externe de commande mis à jour, le procédé comprend en outre:

dans un cas où la porte quantique ne satisfait pas à une condition de fin d'optimisation, appliquer à nouveau le champ externe de commande à un bit quantique de la porte quantique en prenant le champ externe de commande mis à jour comme champ externe de commande actuel, pour mettre à jour le champ externe de commande; et

terminer le processus d'optimisation dans un cas où la porte quantique satisfait à la condition de fin d'optimisation, dans lequel la condition de fin d'optimisation comprend au moins l'une des caractéristiques suivantes: la caractéristique réelle de la porte quantique reflétée par les données de mesure réelles atteint un indice défini, et un changement du champ externe de commande avant et après la mise à jour est inférieur à une valeur définie.

8. Procédé selon l'une quelconque des revendications 1 à 7, dans lequel une fonction de forme d'onde correspondant au champ externe de commande initialisé est:

$$\mu(t) = \frac{\Gamma}{2}\left\{\text{erf}\left(\frac{4\sqrt{\ln 2}}{\sigma}\left[t-(t_0+\sigma)\right]\right) - \text{erf}\left(\frac{4\sqrt{\ln 2}}{\sigma}\left[t-(t_0+T-\sigma)\right]\right)\right\},$$

dans laquelle erf(x) représente une fonction d'erreur gaussienne définie comme $\text{erf}(x) = \frac{2}{\sqrt{\pi}}\int_0^x e^{-\tau^2}d\tau$ , un paramètre $t_0 = 0$ représente un temps de début, $\Gamma$ et $T$ représentent respectivement une amplitude et une durée d'une impulsion du champ externe de commande initialisé, $\sigma$ est lié à la courbure d'un bord de l'impulsion, et t ≥ 0.

9. Dispositif d'optimisation d'une porte quantique, comprenant:

une mémoire (602, 603, 604) stockant des programmes; et
un processeur (601), le processeur (601) étant configuré pour exécuter les programmes stockés dans la mémoire (602, 603, 604) pour mettre en œuvre le procédé selon l'une quelconque des revendications 1 à 8.

10. Produit de programme informatique ou programme informatique, le produit de programme informatique ou le programme informatique comprenant des instructions informatiques, les instructions informatiques étant stockées dans un support de stockage lisible par ordinateur, un processeur (601) lisant les instructions informatiques à partir du support de stockage lisible par ordinateur et exécute les instructions informatiques pour mettre en œuvre le procédé d'optimisation d'une porte quantique selon l'une quelconque des revendications 1 à 8.

11. Support de stockage lisible par ordinateur stockant le produit de programme informatique ou le programme informatique selon la revendication 10.

FIG. 1

| | |
|---|---|
| Obtain an initialized control external field corresponding to a quantum gate | 210 |
| Apply the control external field to a quantum bit of the quantum gate, and acquire actual measurement data of the quantum gate, the actual measurement data being used for reflecting an actual characteristic of the quantum gate | 220 |
| Calculate a gradient of the control external field based on the actual measurement data and ideal data | 230 |
| Update the control external field according to the gradient to obtain an updated control external field, the updated control external field being applied to the quantum bit of the quantum gate to optimize the precision of the quantum gate | 240 |

FIG. 2

Initialized
control
external field

| #1: I, I |
| #2: I, X/2 |
| ... |
| #36: X, X |

Quantum
state
tomography
(QST)

CZ
quantum
gate

Output
quantum state

| Final state #1 |
| Final state #2 |
| ... |
| Final state #36 |

Quantum
process
tomography
(QPT)

Process
matrix

Actual
gate
operator

GRAPE algorithm optimization

FIG. 3

Initialized control
external field

Y/2, -Y/2

Quantum state
tomography
(QST)

CZ
quantum
gate

Actual output
density matrix

GRAPE algorithm
optimization

FIG. 4

FIG. 5

<u>600</u>

612

Network

606    608

Display

609

Input device

Input/output controller
610

601

Central
processing unit

611

Network interface
unit

605

System bus

604    602

Random access
memory

Read-only
memory

System memory 603

607

613

Operating system

614

Application
program

Mass storage
device

615

Other program
module

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110410057

- US 2018123597 A1

**Non-patent literature cited in the description**

- **RE-BING WU et al.** *A Data-Driven Gradient Algorithm for High-precision Quantum Control*